# EUROPÄISCHE PATENTSCHRIFT

(11) **EP 4 228 837 B1**
(45) Veröffentlichungstag und Bekanntmachung des Hinweises auf die Patenterteilung: **09.04.2025**
(21) Anmeldenummer: 21797965.7
(22) Anmeldetag: 15.10.2021
(51) Int. Cl.: B23B 29/04, B23B 31/26

(54) **SPANNSYSTEM FÜR EINEN HOHLSCHAFT MIT SELBSTHEMMUNG**
SELF-LOCKING CLAMPING SYSTEM FOR A HOLLOW SHAFT
SYSTÈME DE SERRAGE POUR UNE TIGE CREUSE AVEC AUTOSERRAGE

(30) Priorität: 16.10.2020 DE 102020127366
(43) Veröffentlichungstag der Anmeldung: 23.08.2023
(73) Patentinhaber: WTO Vermögensverwaltung GmbH, 77797 Ohlsbach (DE)
(72) Erfinder: SCHMIEDER, Markus, 77791 Berghaupten (DE); JANSEN, Karlheinz, 77746 Schutterwald (DE)
(74) Vertreter: DREISS Patentanwälte PartG mbB
(86) Internationale Anmeldenummer: PCT/EP2021/078617
(87) Internationale Veröffentlichungsnummer: WO 2022/079241

(56) Entgegenhaltungen:
- WO-A1-2018/215636
- DE-A1- 102004 035 993
- DE-A1- 102012 108 143
- DE-C1- 10 159 611
- DE-U1- 202004 017 837

## Beschreibung

Spannsysteme mit Hohlschaft und einer komplementär geformten Zentrieraufnahme beispielsweise nach ISO 12164 oder ISO 26623 haben sich seit vielen Jahren am Markt bewährt.

Sie kommen unter anderem in angetriebenen oder feststehenden Werkzeughaltern zum Einsatz. Dann sind die AZentrieraufnahme und das Spannsystem in der Spindel des angetriebenen Werkzeughalters beziehungsweise im Gehäuse des Werkzeughalters integriert. Der Hohlschaft ist Teil eines Adapters, der einen Bohrer, einen Drehmeißel oder ein anderes Werkzeug trägt.

Die bekannten Spannsysteme zum Spannen eines solchen Hohlschafts umfassen eine Spannzange, die aus mehreren Spannsegmenten besteht. Die Spannsegmente sind um einen Zugbolzen herum angeordnet. Durch eine axiale Bewegung des Zugbolzens relativ zu den Spannsegmenten werden diese radial nach außen gedrückt. Dadurch ergibt sich zunächst an den vorderen Enden der Spannsegmente ein Formschluss mit dem Hohlschaft. Durch eine weitere Bewegung des Zugbolzens entsteht eine axiale Spannkraft, welche die Spannsegmente auf den Hohlschaft des Adapters ausüben, so dass der

Adapter in die Zentrieraufnahme gezogen wird. Ein Beispiel für ein solches Spannsystem ist aus der EP 2 164 662 und DE 10 2012 108143 bekannt.

Dieses Spannsystem ist nicht selbsthemmend. Das hat zur Folge, dass auf das Spannsystem während des Betriebs des Werkzeughalters permanent eine Betätigungskraft einwirken muss, um eine Spannkraft aufrecht zu erhalten. Andernfalls würde sich das Spannsystem lösen.

Das ist vor allem bei einem hydraulischen Spannsystem in einer rotierenden Spindel eines angetriebenen Werkzeughalters sehr schwer zu realisieren. Wenn die Betätigungskraft und daraus die Spannkraft von einer im Werkzeughalter angeordneten Feder aufgebracht wird, bedeutet dies einen erhöhten Bauraumbedarf. Außerdem wird die zum Lösen des Spannsystems benötigte Kraft größer, da die Kraft der Spannfeder zusätzlich überwunden werden muss.

Aus der EP 1 924 379 B1 ist eine Spannvorrichtung bekannt, die eine Selbsthemmung aufweist. Der Spannvorgang erfolgt durch einen Spannkopf 6, der mit Spannklauen 5 in an sich bekannter Weise zusammenwirkt. Dem Spannkopf 6 vorgelagert ist ein Zugbolzen 4, der von einer Betätigungseinrichtung in axialer Richtung bewegt wird, um die Spanvorrichtung zu spannen bzw. zu lösen. Zwischen dem Zugbolzen 4 und dem Spannkopf 6 sind eine zweiteilige Schleppzange 7 und eine Spannhülse 11 vorgesehen. Beim Spannen liegt ein Absatz 15 des Zugbolzens 4 an einem Innenbund der Schleppzange 7 an, so dass die Bewegung des Zugbolzens 4 direkt über die Schleppzange 7 auf den Spannkopf 6 übertragen wird. Nachdem der Zugbolzen einen bestimmten Weg zurückgelegt hat, weichen die Hälften der Schleppzange 7 radial nach außen aus. Dadurch wird der Formschluss zwischen den Halbschalen der Schleppzange 7 und dem Zugbolzen aufgehoben.

Im weiteren Verlauf des Spannvorgangs wird die Schleppzange 7 nur noch geringfügig in axialer Richtung mitgeschleppt, dafür aber zwischen einem Konuskopf 12 des Zugbolzens 4 und einer gehäusefest montierten Spannhülse 11 verkeilt, bis die gewünschte Selbsthemmung erreicht ist.

Diese Vorrichtung ist kompliziert im Aufbau; sie benötigt neben dem Spannkopf und dem Zugbolzen noch eine zweiteilige Schleppzange und eine Spannhülse 11. Außerdem erfordert sie einen relativ großen Stellweg des Zugbolzens, benötigt viel Bauraum und ist teuer in der Herstellung.

Aus der DE 196 18 610 A1 ist eine weitere Spanneinrichtung mit Selbsthemmung aus dem Bereich der Werkzeugmaschinen bekannt. Bei ihr tritt Selbsthemmung am vorderen Ende der Spannsegmente ein. Allerdings ist diese Selbsthemmung nicht ausreichend. Daher ist eine zusätzliche Sicherungseinrichtung erforderlich. Diese zusätzliche Sicherungseinrichtung umfasst eine Druckfeder, welche Keilsegmente gegen einen konusförmigen/konischen Teil des Zugbolzens drückt, sodass die Federkraft dieser Druckfeder über die Keilsegmente eine reibschlüssige Verbindung zur Spindel herstellen. Diese reibschlüssige Verbindung wirkt einem unbeabsichtigten Öffnen des Spannsatzes entgegen. Auch diese Lösung benötigt viel Bauraum und ist teuer in der Herstellung. Außerdem muss zum Lösen des Spannsystems, zusätzlich zu den Reibungskräften, auch noch die Kraft der Druckfeder überwunden werden. Das bedeutet hohe Kräfte, die wiederum einen großen Zylinderaufbau erfordern, was ebenfalls nachteilig ist.

Der Erfindung liegt die Aufgabe zu Grunde, ein Spannsystem bereitzustellen, das eine Selbsthemmung aufweist und einen sehr kompakten, einfachen und robusten Aufbau aufweist. Diese kompakte Bauform ist besonders wichtig, wenn nicht viel Platz vorhanden ist. Das ist zum Beispiel auf Revolvern bei Drehzentren der Fall. Hier muss das Spannsystem in stehenden und angetriebenen Werkzeughaltern flexibel in verschiedenen Positionen und Ausrichtungen angebracht werden können. Hierbei wird der Bauraum zum Beispiel durch zulässige Schwenkdurchmesser, Breite der Anschraubfläche und die Schnittstelle zum Drehzentrum stark eingeschränkt.

Diese Aufgabe wird erfindungsgemäß bei einer Spannvorrichtung für einen Hohlschaft, insbesondere einem Hohlschaftkegel mit einer kreisrunden oder polygonalen Außenkontur, umfassend ein oder mehrere Spannsegmente und einen mit den Spannsegmenten zusammenwirkenden Zugbolzen, wobei jedes Spannsegment an einem vorderen Ende an seiner Außenseite eine vordere Spannklaue und an seiner mit dem Zugbolzen zusammenwirkenden Innenseite eine vordere Nase aufweist, wobei jedes Spannsegment an einem hinteren Ende an seiner Außenseite eine hintere Spannklaue und an seiner mit dem Zugbolzen zusammenwirkenden Innenseite eine hintere Nase aufweist, wobei in der Spannstellung die vordere Spannklaue jedes Spannsegments in eine Spannrille des Hohlschafts eingreift und die hintere Spannklaue gegen einen Konus gepresst wird, wobei in der Offenstellung die vordere(n) Spannklaue(n) ohne Eingriff in die Spannrille des Hohlschafts sind, wobei der Zugbolzen durch axiales Verschieben das oder die Spannsegmente von der Spannstellung in die Offenstellung und von der Offenstellung in die Spannstellung bewegt, wobei das oder die Spannsegmente beim Übergang von der Offenstellung zu der Spannstellung eine erste Schwenkbewegung ausführen, so dass die vorderen Spannklauen der Spannsegmente formschlüssig in die Spannrille eingreifen und ein Gelenk für eine nachfolgende zweite Schwenkbewegung des oder der Spannsegmente bilden, wobei während der zweiten Schwenkbewegung die hinteren Nasen des oder der Spannsegmente auf einem dritten Konusabschnitt des Zugbolzens gleiten und die hinteren Spannklauen der Spannsegmente gegen den Konus des Umbauteils oder der Spindel pressen und das oder die Spannsegmente axial verspannen, dadurch gelöst, dass bei einer an die zweite Schwenkbewegung anschließenden weiteren axialen Bewegung des Zugbolzens die hinteren Nasen des oder der Spannsegmente auf einem zweiten Konusabschnitt des Zugbolzens gleiten, so dass eine Selbsthemmung zwischen den Spannsegmenten und dem Zugbolzen entsteht.

Durch die erfindungsgemäß aufeinander abgestimmten Bewegungsabläufe wird in einer ersten Schwenkbewegung die formschlüssige Verbindung zwischen der vorderen Spannklaue der Spannsegmente und einer Spannrille des Hohlschafts erreicht. Fortan dient diese formschlüssige Verbindung am vorderen Ende der Spannsegmente als Drehpunkt / Lager für das oder die Spannsegmente. Anschließend wird in einer zweiten Schwenkbewegung das hintere Ende der Spannsegmente radial nach außen gegen den Konus des Umbauteils oder der Spindel gedrückt und dadurch eine axiale Spannkraft aufgebaut. In einer daran anschließenden weiteren Bewegung des Zugbolzens wird die axiale Spannkraft weiter erhöht. Gleichzeitig entsteht zwischen den hinteren Nasen der Spannsegmente und dem zweiten Konusabschnitt des Zugbolzens eine Selbsthemmung. Die Selbsthemmung tritt am hinteren Ende des Zugbolzens ein. Das hat unter anderem den positiven Effekt, dass der Zugbolzen am vorderen Ende und am hinteren Ende eingespannt und fixiert ist.

Erfindungsgemäß sind keine zusätzlichen Bauteile des Spannsystems erforderlich, um eine betriebssichere Selbsthemmung zu erzeugen. Vielmehr wird durch eine erfindungsgemäße Gestaltung des Zugbolzens und dessen Abstimmung mit den Spannsegmenten und dem Konus die gewünschte Selbsthemmung erzielt. Dadurch baut die erfindungsgemäße Lösung sehr kompakt und ist auch fertigungs- und kostentechnisch sehr vorteilhaft. Ein weiterer Vorteil besteht darin, dass die Betätigungskräfte für das Spannen und Lösen relativ klein sind und vom Betrag her keine großen Unterschiede aufweisen. Naturgemäß ist die zum Spannen erforderliche Betätigungskraft etwas größer als die zum Lösen erforderliche Betätigungskraft.

Die annähernd gleich großen Kräfte für das Spannen und das Lösen sind besonders dann ein Vorteil, wenn das Spannsystem automatisch, mit Hilfe eines Aktuators, wie zum Beispiel einem hydraulisch betätigten Zylinderaufbau betrieben wird. Die Abmessungen eines solchen Aktuators richten sich nämlich in aller Regel nach der größten Betätigungskraft.

Ein weiterer Vorteil des erfindungsgemäßen Spannsystems besteht darin, dass nach der zweiten Schwenkbewegung, wenn die hinteren Nasen des oder der Spannsegmente auf einem zweiten Konusabschnitt des Zugbolzens gleiten, eine Verstärkung der axialen Verspannung der Spannsegmente erfolgt, so dass der Hohlschaft mit einer größeren Kraft in das Umbauteil bzw. die Spindel gezogen wird (Booster-Funktion).

Darüber hinaus wird bei dem erfindungsgemäßen Spannsystem der Zugbolzen an seinem vorderen Ende durch die vorderen Nasen der Spannsegmente in der Spannrille des Hohlschafts und an seinem hinteren Ende durch die hinteren Nasen der Spannsegmente in dem Konus zentriert. In Folge dessen hat das Spannsystem keine oder eine nur sehr kleine Unwucht. Das verbessert die Bearbeitungsqualität der Werkstücke, die mit einem in dem Hohlschaft eingespannten Werkzeug bearbeitet werden und erlaubt bei angetriebenen Werkzeugen die Bearbeitung mit sehr hohen Spindeldrehzahlen.

Ein weiterer Vorteil des erfindungsgemäßen Spannsystems ist darin zu sehen, dass die Form der vorderen Nasen und der Spannrille relativ frei gestaltet werden kann. Es kann unter anderem bei folgenden Systemen eingesetzt werden: ISO 12164 (HSK) oder ISO 26623(Coromant Capto).

In vorteilhafter Ausgestaltung der Erfindung sind an dem Zugbolzen, beginnend an seinem vorderen Ende VE, nacheinander ein erster zylindrischer Abschnitt, ein erster Konusabschnitt, ein zweiter zylindrischer Abschnitt, der zweite Konusabschnitt, der dritte Konusabschnitt und ein dritter zylindrischer Abschnitt ausgebildet. Bei der ersten Schwenkbewegung gleitet die vordere Nase auf dem ersten Konusabschnitt. Bei der zweiten Schwenkbewegung gleitet die hintere Nase auf dem dritten Konusabschnitt. Bei der daran anschließenden, durch eine weitere axiale Bewegung des Zugbolzens hervorgerufene, Schwenkbewegung gleitet die hintere Nase auf dem zweiten Konusabschnitt und es baut sich die Selbsthemmung auf.

Selbsthemmung bedeutet, dass nach erfolgtem Spannen des Spannsystems keine Betätigungskraft mehr auf den Zugbolzen ausgeübt werden muss, der Zugbolzen in seiner Position durch die Selbsthemmung verbleibt und weiterhin eine ausreichend große Spannkraft ansteht.

Anders gesagt: Wenn der Zugbolzen hydraulisch betätigt wird, kann der Zylinderaufbau, der den Zugbolzen betätigt, nach dem Spannen drucklos sein, ohne dass die Spannung des erfindungsgemäßen Spannsystems beziehungsweise des Adapters beeinträchtigt wird.

Das ist ein großer Vorteil, insbesondere wenn das Spannsystem in einer rotierenden Spindel eingebaut ist und die Spindel während der spanenden Bearbeitung rotiert. Dann muss nicht, wie bei anderen Systemen, dauernd eine Betätigungskraft aufgebracht werden, um die Spannkraft zu halten, sondern auf Grund der Selbsthemmung bleibt die Spannkraft im Spannsystem erhalten.

Es ist auch nicht erforderlich, eine Feder zu integrieren, die mit der Spindel rotiert und permanent eine Betätigungskraft aufbringt. Nachteile dieser Lösung wären, dass eine Unwucht durch die Feder entstehen kann und außerdem muss zum Lösen des Spannsystems, zusätzlich zu den Reibungskräften, auch noch die Kraft der Feder überwunden werden. Das bedeutet hohe Betätigungskräfte, die wiederum einen großen Zylinderaufbau erfordern, was ebenfalls nachteilig ist.

Der Konus ist ein Innenkonus und kann entweder direkt in das Gehäuse, ein Umbauteil oder eine Spindel eingearbeitet sein. Alternativ ist es auch möglich, einen Gewindering vorzusehen, in den der Konus eingearbeitet ist. Dieser Gewindering wird dann in das Gehäuse, das Umbauteil oder die Spindel eingeschraubt. Natürlich muss es sich zwischen dem Ring und dem Gehäuse nicht um eine Gewindeverbindung handeln. Es können auch andere Verbindungen eingesetzt werden, die den Konus radial zentrieren und axial in Richtung der Spannkraft an seiner Position halten, wie zum Beispiel eine Bohrung-Zylinderpaarung mit einem Sicherungsring zur axialen Positionierung.

Es hat sich als vorteilhaft erwiesen, wenn der Neigungswinkel des zweiten Konusabschnitts kleiner als 5° oder kleiner als der Arcustangens des Reibungskoeffizienten µ ist, der durch die Paarung der Kontaktflächen von Spannsegment und Zugbolzen entsteht. Dadurch wird auf eine einfache und sehr sichere Weise die Selbsthemmung bewirkt. Selbstverständlich empfiehlt es sich bei der Bestimmung des Reibungskoeffizienten und damit auch des Neigungswinkels des zweiten Konusabschnitts auch Einflüsse von Flüssigkeiten, wie zum Beispiel Öl oder Kühlschmierstoff, der Oberflächenbeschaffenheit, der Werkstoffpaarung, eine mögliche Beschichtung und zusätzliche Sicherheiten für das Lösen durch Schwingungen, zu berücksichtigen. Bei entsprechender Berücksichtigung auch dieser Umstände kann eine Selbsthemmung unter allen im Betrieb vorkommenden Bedingungen gewährleistet werden.

Es hat sich in vielen Fällen als ausreichend beziehungsweise vorteilhaft erwiesen, wenn der Neigungswinkel des zweiten Konusabschnitts in einem Bereich zwischen 3° und 5° liegt. 4° hat sich als ein sehr guter Wert erwiesen.

Die Neigungswinkel des ersten Konusabschnitts und des dritten Konusabschnitts sind demgegenüber sehr viel größer. Sie liegen in einem Bereich zwischen 30° und 60°, bevorzugt ist der Neigungswinkel beider Abschnitte gleich 45°.

Bei dem erfindungsgemäßen Zugbolzen ist vorgesehen, dass der zweite Konusabschnitt und der dritte Konusabschnitt ohne Durchmessersprung und ohne zylindrischen Zwischenabschnitt ineinander übergehen. Dadurch wird der erforderliche Spannweg des Zugbolzens minimiert. Der Übergang zwischen beiden Konusabschnitten erfolgt ohne Unterbrechung.

Die vorderen Nasen der Spannsegmente weisen (beginnend an dem vorderen Ende) eine auf den Neigungswinkel des ersten Konusabschnitts des Zugbolzens abgestimmte erste Kontaktfläche und eine auf den zylindrischen Abschnitt abgestimmte zweite Kontaktfläche auf. Dadurch wird die erste Schwenkbewegung bei dem die vorderen Spannklauen der Spannsegmente in die Spannrille des Hohlschafts einfahren optimal gesteuert.

"Abgestimmt" bedeutet in diesem Zusammenhang, dass die Kontaktflächen zwischen den Nasen der Spannsegmente und dem Zugbolzen in den verschiedenen Positionen des Zugbolzens relativ zu den Spannsegmenten möglichst groß sind und keine hochbelasteten Kantenträger auftreten, um die Flächenpressung und den Verschleiß zu verringern. Die Neigungswinkel sind daher zumeist gleich.

Es ist aber auch möglich, dass zum Beispiel die Form der Kontaktflächen leicht ballig oder tonnenförmig ist, um Kantenträger, die sich aus den Schwenkbewegungen der Spannsegmente ergeben können, zu verhindern. Ebenso können die zylindrischen Abschnitte des Zugbolzens leicht tonnenförmig ausgeführt sein.

Um die Selbsthemmung des erfindungsgemäßen Spannsystems zu verstärken, kann es vorteilhaft sein, den ersten Zylinderabschnitt als Konus mit einem betragsmäßig kleinen negativen Neigungswinkel α auszuführen.

Der Neigungswinkel α des ersten Zylinderabschnitts kann positiv oder negativ sein. Trotz der daraus resultierenden sprachlichen "Ungenauigkeit" wird auch dann von dem ersten Zylinderabschnitt gesprochen, wenn er einen kleinen Neigungswinkel aufweist und daher strenggenommen ein vierter Konusabschnitt ist.

Der Betrag des Neigungswinkels α kann gleich oder kleiner 4° sein. Er ist bei einem negativen Neigungswinkel α kleiner als der Neigungswinkel des zweiten Konusabschnitts am Zugbolzen. Ein positiver Neigungswinkel α kann den Spannweg erhöhen und kann, wie der zweite Konusabschnitt, einen Neigungswinkel kleiner als der Arcustangens (arctan) des Reibungskoeffizienten µ haben.

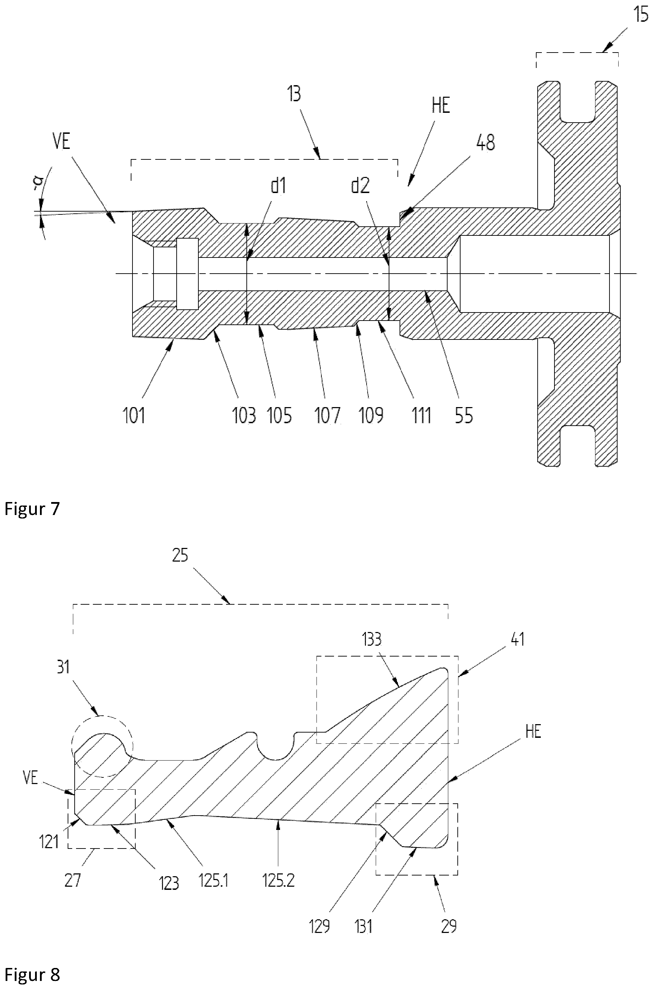

Bei einem negativen Neigungswinkel α ist der Konus am vorderen Ende des Zugbolzens (= erster Zylinderabschnitt) gleich gerichtet wie der Konus im Gewindering; er ist dem zweiten Konusabschnitt und dem dritten Konusabschnitt des Zugbolzens entgegen gerichtet. in der Figur 8 ist ein negativer Neigungswinkel α illustriert.

Dementsprechend sind bei einem negativen Neigungswinkel α der Konus am vorderen Ende des Zugbolzens (= erster Zylinderabschnitt) und der Konus im Gewindering entgegengesetzt gerichtet; ein positiver Neigungswinkel kann z.B. bei HSK sinnvoll sein, um den Spannweg zu erhöhen, da dort die Greiferrille keilförmig ausgeführt ist.

Selbsthemmung bedeutet, dass der Zugbolzen durch konstruktive Maßnahmen daran gehindert wird, sich aufgrund von Unwucht, Vibrationen, Druckstößen des Kühlschmierstoffs oder anderen äußeren Kräften, die im Betrieb auf ihn einwirken können, von der Spannstellung in die Offenstellung zu bewegen. Das wäre eine Bewegung in Richtung der Zentrieraufnahme.

Durch den optionalen negativen Neigungswinkel α bewirken Radialkräfte, die von den vorderen Nasen der Spannsegmente auf den ersten Zylinderabschnitt wirken, eine Axialkraft auf den Zugbolzen in Richtung der Spannstellung.

In weiterer vorteilhafter Ausgestaltung weisen die hinteren Nasen der Spannsegmente eine auf die Neigungswinkel des dritten Konusabschnitts abgestimmte dritte Kontaktfläche und eine an ihrem hinteren Ende eine auf den zweiten Konusabschnitt abgestimmte vierte Kontaktfläche auf.

Dies bedeutet, dass zunächst die zweite Schwenkbewegung durch den dritten Konusabschnitt des Zugbolzens gesteuert wird.

Anschließend, nachdem ein Großteil des Radialhubs und eine gewisse (in der Regel noch nicht ausreichende) Spannkraft erreicht wurde, erfolgt eine weitere Verspannung zwischen Zugbolzen und den hinteren Nasen der Spannsegmente sowie zwischen den hinteren Spannklauen der Spannsegmente und dem Konus im Gewindering beziehungsweise dem Spindelgehäuse. Die hinteren Nasen der Spannsegmente gleiten auf dem zweiten Konusabschnitt. Der Neigungswinkel des zweiten Konusabschnitts ist deutlich kleiner als der Neigungswinkel des dritten Konusabschnitts. Dadurch wird das Untersetzungsverhältnis zwischen der Axialbewegung des Zugbolzens und der Schwenkbewegung der Spannsegmente an deren hinteren Ende verkleinert, sprich bei gleicher Axialbewegung des Zugbolzens ergibt sich eine kleinere Radialbewegung der Spannsegmente. In Folge dessen vergrößern sich (konstante Axialkraft des Zugbolzens vorausgesetzt) die axialen Verspannkräfte der Spannsegmente und damit auch die auf den Hohlschaft wirkende Axial- oder Spannkraft. (Booster-Funktion). Anders ausgedrückt: Trotz relativ kleiner auf den Zugbolzen wirkender Verschiebekräfte wird die erforderliche Spannkraft erreicht, so dass die Spannsegmente den Adapter mit großer Kraft in die Zentrieraufnahme ziehen.

Wegen des kleinen Neigungswinkels des zweiten Konusabschnitts treten dabei relativ große Radialkräfte auf, die über eine große Kontaktfläche zwischen dem zweiten Konusabschnitt des Zugbolzens und den vierten Kontaktflächen an den hinteren Nasen der Spannsegmente sicher und ohne Überlastung der Bauteile übertragen werden.

Unter anderem dadurch ist die erfindungsgemäße Lösung sehr langlebig, sie verschleißt nicht oder nur wenig und die Flächenpressung zwischen den Nasen und dem zweiten Konusabschnitt des Zugbolzens bleibt innerhalb der zulässigen Werte.

Der Neigungswinkel des Konus in dem Gewindering beziehungsweise dem Gehäuse und die entsprechend darauf abgestimmte fünfte Kontaktfläche an den hinteren Spannklauen der Spannsegmente liegt vorzugsweise in einem Bereich von 20° bis 45°. Ein Neigungswinkel in einem Bereich von 25° bis 40°, insbesondere von 30° oder von 35° hat sich als sehr gut geeignet erwiesen.

In weiterer vorteilhafter Ausgestaltung stützen sich die Spannsegmente mit ihrem hinteren Ende gegen eine federbelastete Zwischenscheibe oder direkt gegen eine Druckfeder ab, so dass die Spannsegmente während des Spannvorgangs in axialer Richtung ausweichen können.

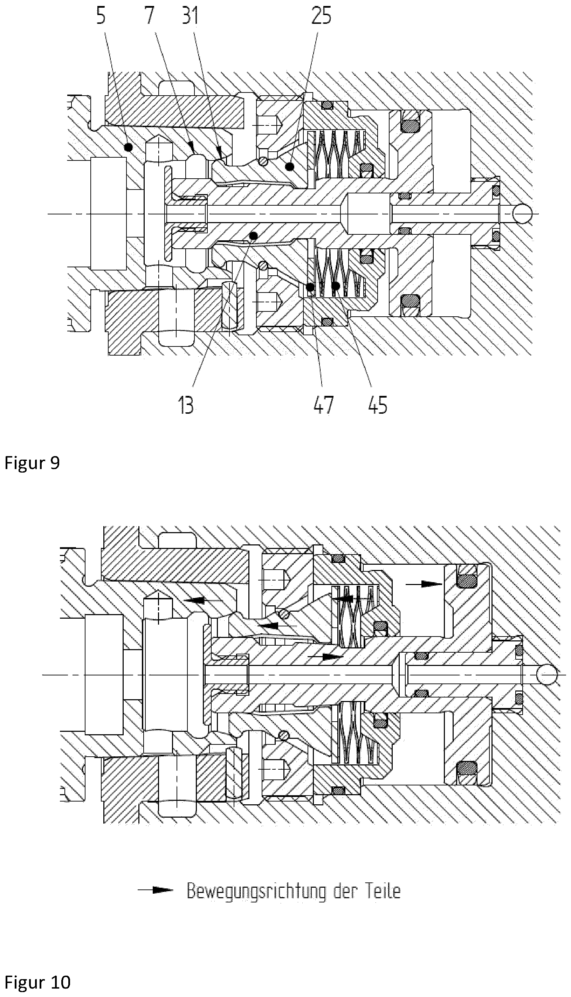

Bei einer Fehlspannung, wenn die vorderen Nasen der Spannsegmente auf dem ersten Konusabschnitt gleiten und die vorderen Spannklauen auf Grund einer fehlerhaften Positionierung des Hohlschafts nicht in die Spannrille des Hohlschafts einfahren können, können die Spannsegmente, wenn diese am Hohlschaft anstehen, zusammen mit dem Zugbolzen gegen die Kraft einer Feder nach hinten fahren (siehe Figuren 9 und 10) und sind zudem entkoppelt von den Kräften auf den Zugbolzen.

Dadurch wird eine Beschädigung des Spannsystems vermieden, wenn, was natürlich nicht erwünscht ist, der Adapter nicht die richtige Position zu Beginn des Spannvorgangs relativ zu der Zentrieraufnahme beziehungsweise zu dem Zugbolzen hat. Daher ist das erfindungsgemäße Spannsystem auch fehlertolerant und eine Fehlfunktion führt nicht zu einem Totalschaden des Spannsystems.

Weitere Vorteile und vorteilhafte Ausgestaltungen der Erfindung sind den nachfolgenden Zeichnungen, deren Beschreibungen und den Patentansprüchen entnehmbar.

### Figuren

Es zeigen:
Figuren 1 bis 5 ein erstes Ausführungsbeispiel der Erfindung in einem Längsschnitt in verschiedenen Positionen;
Figur 6 ein weiteres Ausführungsbeispiel der Erfindung;
Figur 7 ein Längsschnitt eines erfindungsgemäßen Zugbolzens;
Figur 8 ein Längsschnitt eines erfindungsgemäßen Spannsegments;
Figur 9 und 10 eine Fehlspannung eines Adapters in verschiedenen Positionen;
Figur 11 ein weiteres Ausführungsbeispiel der Erfindung und
Figur 12 ein weiteres Ausführungsbeispiel des vorderen Teils eines erfindungsgemäßen Spannsegments im Längsschnitt Beschreibung der Ausführungsbeispiele

Der zu spannende Adapter 1 wird von Hand oder automatisch in eine Zentrieraufnahme 3 eingelegt.

Im Zusammenhang mit der Erfindung wird der Ausdruck "Adapter" als Oberbegriff für alle Bauteile oder Baugruppen, die mit Hilfe des erfindungsgemäßen Spannsystems in einer Zentrieraufnahme 3 gespannt werden können, verwandt. Es kann sich dabei um ein Werkzeug, eine Werkzeugaufnahme (Bohrfutter), eine Vorrichtung bzw. eine Palette zum Spannen von Werkstücken, und anderes mehr handeln.

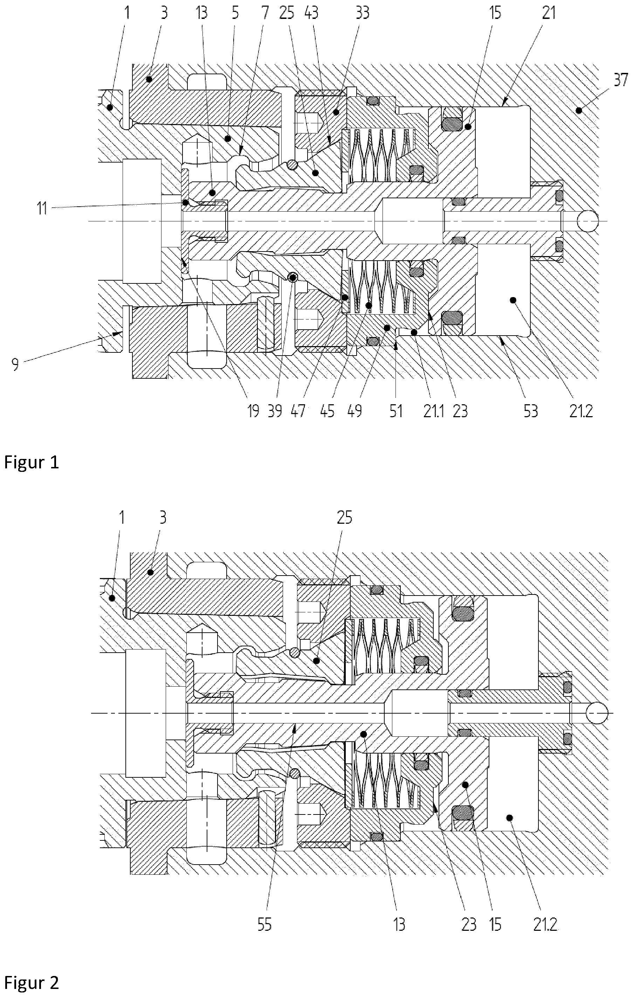

In der Figur 1 ist das erste Ausführungsbeispiel eines erfindungsgemäßen Spannsystems mit Selbsthemmung in der Offenstellung bzw. der gelösten Stellung dargestellt.

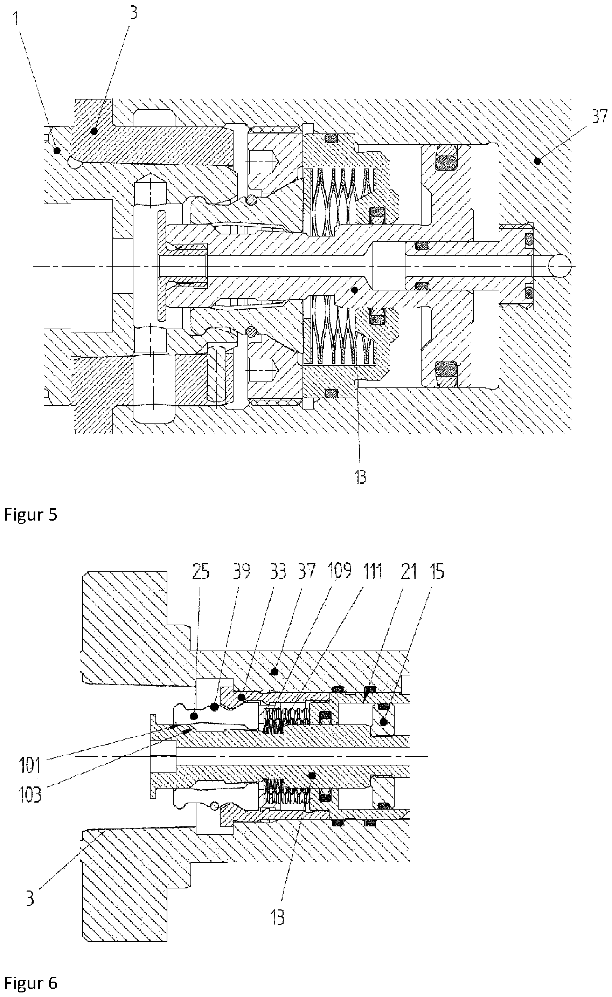

In der Figur 5 ist das gleiche Spannsystem in der Spannstellung mit Selbsthemmung dargestellt.

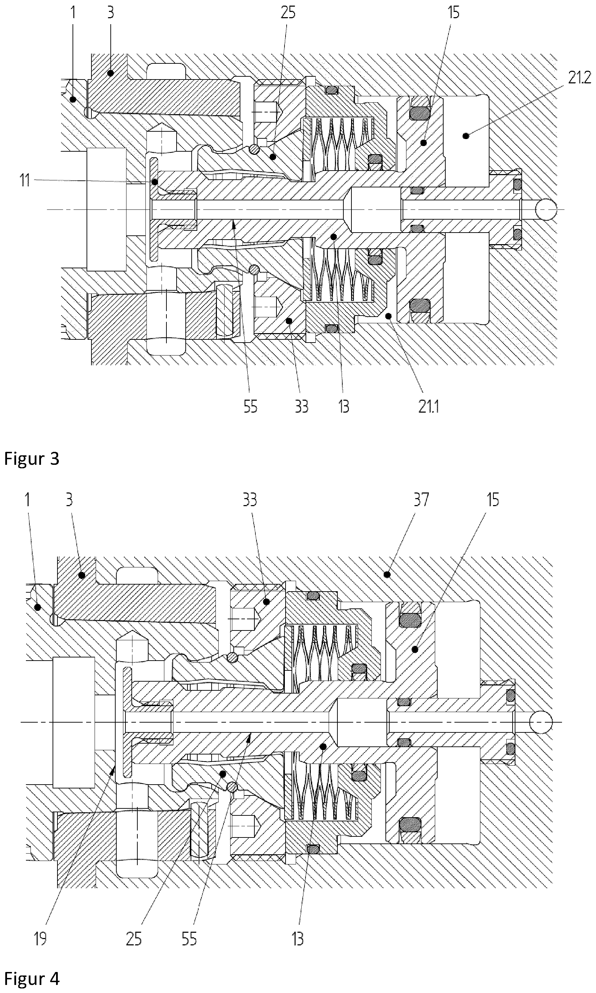

Die Figuren 2 bis 4 zeigen Zwischen-Positionen des Spannsystems anhand derer die Funktionsweise des Spannsystems erläutert wird. Beim Lösen des Spannsystems werden, ausgehend von der in Figur 5 dargestellten Spannstellung mit Selbsthemmung, die in den Figuren 4 bis 1 dargestellten Positionen, d. h. in umgekehrter Reihenfolge wie beim Spannen, durchlaufen.

In allen Figuren werden für die gleichen Bauteile die gleichen Bezugszeichen verwandt. Aus Gründen der Übersichtlichkeit sind nicht alle Bezugszeichen in jeder Figur eingetragen.

In der Figur 1 ist ein zu spannender Adapter 1 dargestellt. Er ist nicht Teil des erfindungsgemäßen Spannsystems, sondern wird von ihm in einer Zentrieraufnahme 3 gespannt.

Bei dem in den Figuren 1 bis 5 dargestellten Ausführungsbeispiel ist die Zentrieraufnahme 3 ein separates Bauteil, das in die Spindel 37 eingesetzt ist.

Der Adapter 1 umfasst einen Hohlschaft 5, der mit der erfindungsgemäßen Spannvorrichtung zusammenwirkt. Dazu hat der Hohlschaft 5 eine Spannrille 7 und eine Stirnseite 9.

Der Hohlschaft 5 taucht in der Regel in eine Zentrieraufnahme 3 ein, da bei Werkzeugmaschinen der Hohlschaft 5 des Adapters 1 und die Zentrieraufnahme 3 axial und radial spielfrei zusammenwirken. Die Anforderungen an den Rundlauf und den Planlauf des Adapters 1 sowie der zwischen Zentrieraufnahme 3 und Hohlschaft 5 übertragbaren Drehmomente werden immer höher. Hohlschaft 5 und Zentrieraufnahme 3 können zum Beispiel nach ISO 12164 oder ISO 26623 ausgeführt sein. Aber auch andere Ausführungen ohne zentrierende Wirkung sind möglich. Eine zentrierende Aufnahme ist zum Beispiel nicht notwendig, wenn in einer Werkstückspannvorrichtung mehrere erfindungsgemäße Spannsysteme eingesetzt werden, um ein Werkstück in der Vorrichtung zu spannen.

In den Figuren wird als Zentrieraufnahme 3 beispielhaft ein "Polygonaler Hohlschaftkegel mit Plananlage" nach ISO26623 (Capto) verwendet. Die Zentrieraufnahme 3 kann, wie in den Figuren dargestellt ein zusätzliches oder separates Bauteil sein, das durch bzw. in Umbauteilen (Gehäusen, rotierenden Spindeln, ortsfesten Werkstückspannvorrichtungen, etc.) aufgenommen wird.

Die Zentrieraufnahme 3 kann aber auch in eines der "Umbauteile" integriert sein; dann sind Umbauteil und Zentrieraufnahme einstückig ausgeführt. Ein dementsprechendes Ausführungsbeispiel ist in der Figur 6 dargestellt. Diese Bauart benötigt weniger radialen Bauraum; daher kommt sie oft bei rotierenden bzw. angetriebenen Spindeln zum Einsatz. In der zugehörigen Figurenbeschreibung zu Figur 6 werden auch die konstruktiven Auswirkungen beschrieben.

Nachfolgend wird anhand der Figuren 1 bis 5 der Prozess des Spannens in verschiedenen Etappen dargestellt und erläutert.

Zunächst wird in der Figur 7 ein erfindungsgemäßer Zugbolzen 13 dargestellt. An den Zugbolzen 13 schließt bei diesem Ausführungsbeispiel ein Kolben 15 an, der Teil eines Zylinderaufbaus ist. In dieser Figur sind die erfindungsgemäßen Funktionsflächen gut erkennbar und mit Bezugszeichen versehen.

Es sind dies:
101: ein erster zylindrischer Abschnitt;
103: ein erster Konusabschnitt;
105: ein zweiter zylindrischer Abschnitt;
107: ein zweiter Konusabschnitt;
109: ein dritter Konusabschnitt und
111: ein dritter zylindrischer Abschnitt.

Zwischen dem zweiten zylindrischen Abschnitt 105 und dem zweiten Konusabschnitt 107 kann ein Durchmessersprung vorhanden sein.

Ein vorderes Ende VE und ein hinteres Ende HE sind ebenfalls eingezeichnet. "Vorne" ist der Bereich der Zentrieraufnahme 3 (siehe Figur 1); der dritte zylindrische Abschnitt 111 (siehe Figuren 7 und 1) befindet sich in der Terminologie der Figurenbeschreibung am hinteren Ende HE des Zugbolzens 13; er ist "hinten".

Die in der Figur 7 eingezeichneten Funktionsflächen 101 bis 111 des Zugbolzens 13 wirken zusammen mit entsprechenden Kontaktflächen an der "Innenseite" der Spannsegmente. Sie sind in der Figur 8 dargestellt und werden wie folgt bezeichnet:
Eine erste Kontaktfläche 121 und eine zweite Kontaktfläche 123 bilden die vordere Nase 27.

Eine dritte Kontaktfläche 129 und eine vierte Kontaktfläche 131 bilden die hinter Nase 29.

Ein (hier zweiteiliger) Übergangsabschnitt 125 ist in diesem Sinne keine Funktionsfläche. Er schafft den für den zweiten Konusabschnitt 107 des Zugbolzens 13 erforderlichen Freiraum.

Auf der Außenseite der Spannsegmente 25 sind eine vordere Klaue 31 und eine hintere Klaue 41 ausgebildet. Die hintere Klaue 41 ist im Wesentlichen als kegelstumpfförmige oder konusförmige fünfte Kontaktfläche 133 ausgebildet und kann auch konkav ausgeformt werden. Die Form der vorderen Klaue 31 ist auf die Form der Spannrille 7 in dem Hohlschaft 5 abgestimmt. Aus den schon genannten ISO-Normen sind z.B. radien- und fasenförmige Gestaltungen bekannt. Insbesondere sollen ein guter Formschluss und eine möglichst niedrige Flächenpressung zwischen den vorderen Klauen 31 und der Spannrille 7 erreicht werden, wenn das Spannsystem gespannt ist.

Zurück zur Figur 1: Aus Gründen der Übersichtlichkeit sind die Bezugszeichen 101 bis 133 in der Figuren 1 bis 5 nicht eingezeichnet. Trotzdem werden diese Bezugszeichen in der Figurenbeschreibung benutzt.

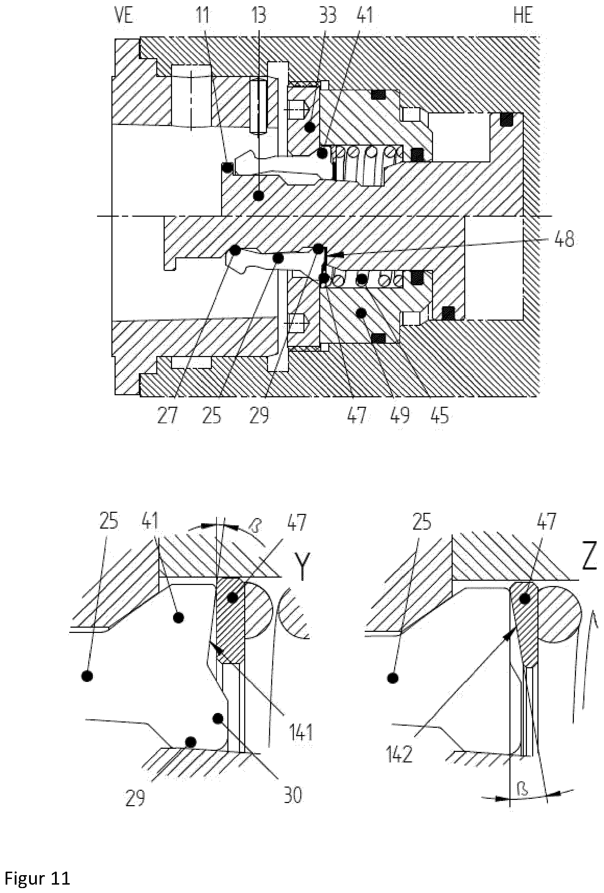

Beim Einlegen des Adapters 1 in die Zentrieraufnahme 3 wird der Hohlschaft 5 in Richtung einer Anschlagscheibe 11 in eine definierte Position bewegt. Die Anschlagscheibe 11 ist an einem Zugbolzen 13 befestigt oder in den Zugbolzen 13 integriert (einteilige Bauweise). In der Figur 6 bzw. Figur 11 ist ein Ausführungsbeispiel in einteiliger Bauweise dargestellt.

Die Anschlagscheibe 11 stellt gewissermaßen einen Tiefenanschlag für den Adapter 1 bzw. den Hohlschaft 5 dar und sorgt dafür, dass der Adapter 1 vor Beginn des Spannvorgangs eine in axialer Richtung definierte Position einnimmt. Das geschieht indem der Grund 19 des Hohlschafts 5 an der Anschlagscheibe 11 zur Anlage kommt. Für das automatische Spannen ist die Relation von Spannrille 7 des Hohlschafts 5 und der vorderen Spannklauen 31 des oder der Spannsegmente 25 wichtig; nur wenn diese Relation stimmt, können die vorderen Spannklauen 31 in die Spannrille 7 des Hohlschafts 5 einfahren. Dazu kann es sinnvoll sein, die Anschlagscheibe auf die definierte Position einzustellen, indem man das Gewinde zur Einstellung nutzt oder die Vorderseite der Anschlagscheibe auf das gewünschte Maß für die Erreichung der Position bearbeitet.

Bei Zentrieraufnahmen mit Hohlschaftkegel und Plananlage ist die definierte Position bei ca. 1,5 bis 0,5 mm, typischerweise bei ca. 1 mm Plananlagenabstand zwischen der Stirnseite der Zentrieraufnahme 3 und der Planfläche 9 des Adapters 1. Die Größe des Abstands hängt von der Art des Adapters ab.

Die Anschlagscheibe 11 am Ende des Zugbolzens 13 hat einen großen Außendurchmesser. Ein "Grund" 19 des Hohlschafts kommt in Anlage zu der Anschlagscheibe 11. Dadurch wird die Plananlage des Adapters 1 verbessert und die Gefahr reduziert, dass der Adapter 1 relativ zu der Zentrieraufnahme 3 verkippt.

Der Zugbolzen 13 muss zu diesem Zeitpunkt (d. h. vor Beginn des Spanvorgangs) in seiner axialen Lage genau positioniert werden. Nur dann hat die Anschlagscheibe 11 eine exakte Lage in axialer Richtung und nur dann kann die oben erwähnte definierte Position des Adapters 1 gewährleistet werden.

Die axiale Lage des Zugbolzens 13 wird bei diesem Ausführungsbeispiel über dessen Betätigungsmittel festgelegt. Das Betätigungsmittel ist in den Figuren beispielhaft eine Kolben-Zylinder-Kombination (auch als "Zylinderaufbau" bezeichnet, deren Kolben 15 mit dem Zugbolzen 13 und der Anschlagscheibe 11 verbunden ist.

Wenn der Kolben 15, wie in Figur 1 dargestellt, an seinem vorderen Endanschlag 23 anliegt, dann haben der Zugbolzen 13 und die Anschlagscheibe 11 eine definierte axiale Position.

Der doppeltwirkende Kolben 15, der den Zugbolzen 13 betätigt, ist fluiddicht in einem Zylinder 21 geführt. Je nachdem welcher Zylinderraum 21.1 oder 21.2 mit einem unter Druck stehenden Fluid gefüllt wird, bewegt sich der Kolben 15 in dem Zylinder 21 in die eine oder die andere Richtung. In der in Figur 1 dargestellten axialen Position des Kolbens 15 an einem vorderen Endanschlag 23 hat der Zylinderraum 21.2 sein maximales Volumen; das Volumen des Zylinderraums 21.1 ist minimal.

Das erfindungsgemäße Spannsystem umfasst eine Spannzange, die aus einem oder mehreren Spannsegmenten 25 besteht. Die Spannsegmente 25 sind um den Zugbolzen 13 herum angeordnet in an sich bekannter Weise. Die Spannsegmente 25 können untereinander verbunden sein oder als einzelne Spannsegmente 25 vorliegen.

Am vorderen Ende VE bilden die erste Kontaktfläche 121 und die zweite Kontaktfläche 123 eine vordere Nase 27. Am hinteren Ende HE bilden die dritte Kontaktfläche 129 und die vierte Kontaktfläche 131 eine hintere Nase 29.

Die Nase 27 auf der Innenseite der Spannsegmente 25 ist so ausgebildet, dass sie in der in Figur 1 dargestellten Position des Zugbolzens 13 an dem zweiten zylindrischen Abschnitt 105 (Durchmesser d1) des Zugbolzens 13 aufliegt.

Die Nase 29 auf der Innenseite der Spannsegmente 25 ist so ausgebildet, dass sie in der in Figur 1 dargestellten Position des Zugbolzens 13 an dem dritten zylindrischen Abschnitt 111 (Durchmesser d₂) des Zugbolzens 13 aufliegt.

In den zylindrischen Abschnitten 101, 105 und 111 ist der Zugbolzen 13 zylindrisch; eine leicht kegelige, konkave oder konvexe Ausgestaltung ist aber auch möglich.

Der Außendurchmesser der Spannzange bzw. der Spannsegmente 25 im Bereich der vorderen Spannklauen 31 ist bei diesem Ausführungsbeispiel und in dieser Position des Zugbolzens 13 so klein, dass der Hohlschaft 5 über die vordere Anschlagscheibe 11 und den Hüllkreisdurchmesser der nachfolgenden vorderen Spannklauen 31 geschoben werden kann.

Im hinteren Teil des erfindungsgemäßen Spannsystems ist ein Gewindering 33 in das umgebende Gehäuse/Umbauteil bzw. ein Spindelgehäuse 37 eingedreht. An dem Gewindering 33 ist ein Konus 43 ausgebildet, der zusammen mit der hinteren Spannklaue 41 bzw. der fünften Kontaktfläche 133 des Zugbolzens 13 zusammenwirkt. Wenn die hinteren Nasen 29 des oder der Spannsegmente 25 von der dritten oder vierten Kontaktfläche 129, 131 des Zugbolzens 13 radial nach außen bewegt werden, dann lenkt der Konus 43 diese Bewegung am hinteren Ende HE des oder der Spannsegmente 25 in eine axiale Bewegung der Spannsegmente 25 um. Anders ausgedrückt: Die Spannsegmente 25 bewegen sich in Figur 1 nach rechts, d. h. in Richtung des hinteren Endes HE, wenn der Zugbolzen 13 nach rechts bewegt wird. Durch den Formschluss zwischen den vorderen Klauen 31 und der Spannrille 7 des Hohlschafts 5 wird der Adapter 1 in die Zentrieraufnahme 3 gezogen. Das Spannsystem wird gespannt.

Der Innendurchmesser des Gewinderings 33 bzw. des Konus 43 wird vorteilhafterweise so gewählt, dass auch der Gewindering 33 über den Hüllkreisdurchmesser der vorderen Spannklauen geschoben werden kann. Dies muss zumindest in der in Figur 1 dargestellten Position des Zugbolzens 13 möglich sein. Das vereinfacht Montage und Demontage des Spannsystems in einem Gehäuse oder einer Spindel 37.

Der Hüllkreisdurchmesser der hinteren Spannklaue 41, bzw. der Hüllkreisdurchmesser der fünften Kontaktfläche 133 ist in jeder Stellung größer als der innere Durchmesser des Konus 43.

Wenn - zum Beispiel aus Platzgründen - kein Gewindering 33 eingesetzt werden kann, wird der Konus 43 direkt in das Umbauteil (z. B. das Spindelgehäuse 37) integriert. Dann erfolgt die Montage der Spannsegmente 25 von "hinten".

Damit die Spannzange bzw. deren Spannsegmente 25 in dieser Position immer den kleinsten Hüllkreisdurchmesser ausbilden, müssen die Spannsegmente 25 vorgespannt werden. Dies kann durch eine Spannfeder 39 am hinteren Ende HE der Spannzange bzw. der Spannsegmente 25 oder wie in den Figuren 1 bis 6 dargestellt in etwa mittiger Anordnung zur Längsausdehnung der Spannsegmente 25 erfolgen. Es ist auch möglich die Spannsegmente 25 federelastisch untereinander zu einer einteiligen Spannzange (ohne gesondertes Federelement) zu verbinden (nicht dargestellt).

Ziel dieser Ausführungsformen ist es, über die Vorspannung, die Spannsegmente 25 zentrisch rund um den Zugbolzen 13 zusammenzudrücken. Vorteilhaft ist es, die Spannfeder 39 dabei in etwa mittig zu der Längsausdehnung der Spannsegmente 25 anzuordnen, damit die Spannsegmente 25 nicht verkippen können und gleichmäßig vorn und hinten an den Nasen 27 und 29 zur Anlage am Zugbolzen 13 kommen.

Eine Druckfeder 45 im hinteren Bereich stützt sich zum einen an einer Stirnseite der Druckfederhülse 49 ab und drückt in dem dargestellten Zustand der Figur gegen eine optionale Zwischenscheibe 47. Die Zwischenscheibe 47 wiederum liegt formschlüssig an einer Schulter des Gewinderings 33 an. Es ist auch möglich, die Zwischenscheibe 47 wegzuzulassen, so dass sich die Druckfeder 45 direkt gegen die Schulter des Gewindering 33 abstützt.

Die Zwischenscheibe 47 bzw. die Druckfeder 45 kann auch an einer Schulter des Umbauteils oder des Spindelgehäuses 37 anliegen. Wegen dieser Anlage kann die Druckfeder 45 die Spannsegmente 25 nicht weiter in Richtung des vorderen Ende VE bewegen als in der Figur 1 dargestellt und kann dennoch vorgespannt sein.

Die Spannsegmente 25 werden, wie bereits beschrieben, durch die Spannfeder 39 nach innen gedrückt und liegen mit der vorderen Nase 27 und der hinteren Nase 29 am Zugbolzen 13 an.

In axialer Richtung wird die Lage der Spannsegmente 25 durch den (Innen-)Konus 43 des Gewinderings 33, der von der Druckfeder 45 vorgespannten Zwischenscheibe 47, bzw. der Druckfeder 45 und dem Zugbolzen 13 bestimmt.

Es kann vorteilhaft sein, um eine leichte Vorspannung in axialer Richtung zu erzeugen und keine freien Schwingungen zu ermöglichen, die Spannsegmente 25 mit zumindest einer der Nasen 27, 29 an dem ersten Konusabschnitt 103 oder dem dritten Konusabschnitt 109 anliegen zu lassen und eine leichte Verspannung gegenüber der vorgespannten Zwischenscheibe 47 zu erreichen.

Besteht die Spannzange aus mehreren voneinander getrennten Spannsegmenten 25 ist es sinnvoll diese so herzustellen, dass der Abstand zwischen den einzelnen Spannsegmenten 25, in der Position, in der sie den kleinsten Durchmesser ausbilden, nahezu null ist. Beim Auseinanderfahren werden die Spannsegmente 25 über die Spannfeder 39 dadurch annähernd gleich über den Umfang verteilt. Dadurch ist gewährleistet, dass keine oder nur sehr kleine Unwuchten beim Spannen des Spannsystems entstehen; eine zusätzliche Separierungseinheit, welche die Spannsegmente 25 gleichmäßig über den Umfang verteilt, wird nicht benötigt. Wird diese dennoch benötigt (z.B. bei mit höchster Drehzahl angetriebenen Werkzeugmaschinenspindeln), kann die Separierung zum Beispiel als Bestandteil der Zwischenscheibe 47 durch zusätzliche Stege oder Nuten mit den entsprechenden Gegenführungen an oder zwischen den Spannsegmenten erzeugt werden.

In der speziellen Ausbildung der Figuren 1 bis 5 ist die Druckfeder 45 in einer Druckfederhülse 49 aufgenommen. Die Druckfederhülse 49 ist in einem Absatz 51 einer Stufenbohrung 53 in der Spindel 37 bzw. des Umbauteils aufgenommen.

Der Absatz 51 bildet über die Druckfederhülse 49 den Längsanschlag des Gewinderings 33. Gleichzeitig wird die Druckfederhülse 49 festgehalten.

Bei dem in Figur 6 dargestellten Ausführungsbeispiel wird der Längsanschlag über einen Flansch am Gewindering 33 realisiert. Der Flansch kann polygonförmig sein. Ziel ist jeweils, dass bei einer hydraulischen Ansteuerung möglichst viel Durchmesser für den Zylinder 21 zur Verfügung steht.

Dann nämlich sind die vom Kolben 15 bereitgestellten Betätigungskräfte maximal.

Hinter der Druckfederhülse 49 ist der Zylinder 21 angeordnet. Die Druckfederhülse 49 dient auch als vorderer Endanschlag 23 für den Kolben 15. Der Zugbolzen 13 kann auch auf andere Arten und Weisen in axialer Richtung verschoben werden, um das Spannsystems zu Spannen bzw. zu Lösen (z.B. über Exzenter, Keile etc.).

In Verbindung mit dem Zylinderaufbau sind die notwendigen Dichtungen im Kolben 15 und auch in der Druckfederhülse 49, zur Abdichtung der Kolbenstange (= hinterem Ende des Zugbolzens), dargestellt.

Der Kolben 15 ist in dieser Ausführungsform beispielhaft mit dem Zugbolzen 13 einteilig verbunden, bzw. ausgeführt. Je nach Ausführung kann aber auch eine mehrteilige Ausführung sinnvoll sein. Wesentlich ist dann nur, dass Kolben 15 und Zugbolzen 13 in axialer Richtung miteinander verbunden sind.

Aus den Figuren 1 bis 7 ist weiterhin erkennbar, dass der Zugbolzen 13 in axialer Richtung durchbohrt ist. Die axiale Bohrung 55 (siehe Figur 7) im Zugbolzen 13 dient zur Durchleitung eines Fluids (Kühlschmierstoff (KSS)) oder eines Fluid-Luft-Gemischs (Minimalmengenschmierung). Dabei wird das Fluid über eine Verbindungsstelle von den Umbauteilen (Gehäuse, Spindel 37 etc.) über die Betätigungseinheit (Zylinder 21 und Kolben 15) in den Zugbolzen 13 geleitet.

Die Anschlagscheibe 11 am vorderen Ende VE des Zugbolzens 13 hat eine oder mehrere Durchgangsbohrungen. Hier erfolgt die Fluidübergabe an die anschließenden Bauteile (in diesem Beispiel den Adapter 1), die mit Fluid versorgt werden sollen.

Die Ausgestaltung dieser Übergabe kann abgedichtet sein, kanalisiert werden oder wie hier dargestellt ohne Abdichtung und Kanalisierung erfolgen.

Anhand der Figuren 2 bis 5 wird nun das Spannen des erfindungsgemäßen Spannsystems mit Selbsthemmung erläutert.

Die Figur 2 zeigt das Spannsystem in einer Position in der der Zugbolzen 13 verglichen mit der in Figur 1 dargestellten Offenstellung etwas nach rechts bewegt wurde. Das lässt sich beispielsweise an den Spalt zwischen dem Endanschlag 23 und dem Kolben 15 festmachen. Der Zugbolzen 13 hat den gleichen Weg zurückgelegt. Die Spannsegmente 25 kommen mit ihren vorderen Nasen 27 in Anlage an dem ersten Konusabschnitt 103 des Zugbolzens 13. D. h. die Spannsegmente 25 werden mit ihren vorderen Enden radial nach außen bewegt. Die Spannsegmente 25 liegen mit ihren hinteren Nasen 29 noch auf dem dritten zylindrischen Abschnitt 111 auf. Die axiale Bewegung des Zugbolzens 13 bewirkt also eine erste Kippbewegung der Spannsegmente 25. Der Drehpunkt der Kippbewegung befindet sich an den hinteren Nasen 29. Dadurch wird der Hüllkreisdurchmesser der vorderen Spannklauen 31 größer.

Der erste Konusabschnitt 103 hat einen Neigungswinkel von 30° bis 60° und bevorzugt 45°. Die Spannsegmente 25 sind im Bereich der vorderen Nase 27 an der Kontaktstelle zum ersten Konusabschnitt 103 so ausgebildet, dass sie über einen weiten Bereich zumindest eine Zwei-Punkt-Auflage haben und nicht verkippen können. Dabei kann die Ausformung der ersten Kontaktfläche 121 (siehe Figur 8) ein Konus oder auch eine leicht ballige Konuskontur sein, um reine Kantenträger zu verhindern.

Die vorderen Spannklauen 31 der Spannsegmente 25 haben noch keinen Kontakt mit der Spannrille 7 im Hohlschaft 5.

Der Hohlschaft 5 wird durch den Maschinenbediener, bevorzugt aber durch eine Handhabungsvorrichtung (nicht dargestellt), wie z. B. einen Handhabungsroboter, in Anlage an der Anschlagscheibe 11 des Zugbolzens 13 gehalten. Das bedeutet, dass auch der Adapter 1 und mit ihm der Hohlschaft 5 zusammen mit dem Zugbolzen 13 in die Zentrieraufnahme einfährt, bis der Hohlschaft 5 an dem konusförmigen Abschnitt der Zentrieraufnahme 3 zur Anlage kommt. Dann kann er sich zunächst nicht weiter in axialer Richtung bewegen. Durch diese erste axiale Einzugsbewegung verringert sich der Abstand der Planfläche 9 des Adapters 1 zur Anlagefläche der Zentrieraufnahme 3 auf wenige 1/10 mm.

Alternativ ermöglicht die Konstruktion aber auch, dass der Adapter 1 in der in Figur 1 dargestellten Startposition verbleibt. Auch dann ist für den hier beschriebenen ersten Wegabschnitt ausreichend Fangraum zwischen den vorderen Spannklauen 31 und der Spannrille 7 des Hohlschafts 5 vorhanden. Dadurch können die vorderen Spannklauen 31 der Spannsegmente 25 ungehindert in die Spannrille 7 eintauchen.

Während dieser ersten Teil-Bewegung wird die Zwischenscheibe 47 durch die Druckfeder 45 gegen die Stirnseite des Gewinderings 33 gedrückt und bleibt somit axial ortsfest liegen. Wenn keine Zwischenscheibe 47 vorhanden ist, dann bleibt das vordere Ende der Druckfeder in Anlage an dem Gewindering 33.

In der Figur 3 ist das Spannsystem in einer Position dargestellt in der sich der Zugbolzen 13 gegenüber der in Figur 2 dargestellten Position 2 nochmals etwas nach rechts weiterbewegt hat.

In dieser Position sind die vorderen Nasen 27 über den ersten Konusabschnitt 103 weiter nach außen gewandert bis sie den ersten zylindrischen Abschnitt 101 des Zugbolzens 13 erreicht haben. Gleichzeitig haben sich die vorderen Spannklauen 31 der Spannsegmente 25 nach außen in die Spannrille 7 bewegt; es wurde dadurch ein Formschluss zwischen den vorderen Spannklauen 31 und der Spannrille 7 hergestellt, der Kräfte in axialer Richtung übertragen kann.

Parallel dazu wandern in dieser Phase des Spannvorgangs auch die hinteren Nasen 29 der Spannsegmente 25 über den dritten Konusabschnitt 109 nach außen, Dadurch wird ein erster "großer" radialer Hub des hinteren Endes der Spannklauen 25 bewirkt.

Der dritte Konusabschnitt 109 hat bevorzugt einen Neigungswinkel von 45°, er kann in einem Bereich zwischen 30° und 60° liegen. Bevorzugt sind die Neigungswinkel des ersten Konusabschnitts 103 und des dritten Konusabschnitts 109 gleich. Bewährt hat sich auch beim ersten Konusabschnitt 103 ein Neigungswinkel von 45°

Die hintere Spannklaue 41, bzw. die fünfte Kontaktfläche 133 der Spannsegmente 25 befindet sich immer in Anlage an dem Konus 43 des Gewinderings 33. Der Konus 43 des Gewinderings 33 hat seinen größten Durchmesser in Richtung des hinteren Endes. Die Konusabschnitte 103, 107 und 109 haben ihre größten Durchmesser in Richtung des vorderen Endes. Anders ausgedrückt: Der Konus 43 des Gewinderings 33 und die Konusabschnitte 103, 107 und 109 sind entgegengesetzt ausgerichtet.

Daher bewirkt die Radialbewegung der hinteren Nasen 29 auf dem dritten Konusabschnitt 109 einen großen ersten Spannhub der Spannsegmente 25, und damit auch des Adapters 1, in axialer Richtung. Das wird über das Zusammenspiel des Innenkonusses 43 des Gewinderings 33 mit der fünften Kontaktfläche 133 der Spannsegmente 25, sowie der hinteren Nasen 29 mit dem dritten Konusabschnitt 109 bewirkt.

Der Neigungswinkel des Konus 43 in dem Gewindering 33 zur Mittelachse beträgt dabei bevorzugt 30° bis 35°. Neigungswinkel von 20° bis 60° sind möglich. Durch Variation des Neigungswinkels kann die Kraft-BewegungsUmsetzung optimiert werden.

Bei Neigungswinkeln von 30° für den Konus 43 wird die Umsetzung der Durchmesseränderung im Bereich des dritten Konusabschnitts 109 und (in einem späteren Stadium des Spannvorgangs) des zweiten Konusabschnitts 107 des Zugbolzens 13, in eine axiale Verschiebung der Spannsegmente 25 um einen Faktor von etwa 1,7 verstärkt. Ein kleinerer Neigungswinkel erhöht diesen Faktor; allerdings zu Lasten einer abnehmenden Spannkraft und einer erhöhten Flächenpressung zwischen Spannsegment 25 und Zugbolzen 13. Eine Vergrößerung der Neigung führt zu einer Reduktion des Faktors.

Der Abstand zwischen vorderen und hinteren Nasen 27, 29 ist so aufeinander abgestimmt, dass sich am Ende des Weges der hinteren Nase 29 über den dritten Konusabschnitt 109, die vordere Nase 27 auf dem ersten zylindrischen Abschnitt 101 des Zugbolzens 13 befindet. Dadurch sind die vorderen Spannklauen 31 der Spannsegmente 25 in der umlaufenden Spannrille 7 radial verriegelt.

Sollte der Adapter 1 durch den Bediener oder in der Regel durch ein Handhabungssystem (z.B. einen Roboter) in seiner axialen Ausgangslage gehalten worden sein, wird er nun in die Zentrieraufnahme 3 hineingezogen. Das Handhabungssystem wird in diesem Stadium für die Haltung des Adapters nicht mehr benötigt.

Da die Spannsegmente 25 durch die Einzugsbewegung des Zugbolzens 13 und den dadurch ausgelösten Spannhub des Adapters 1 in axialer Richtung nach hinten fahren, wird die Anschlagscheibe 47 gegen die Kraft der vorgespannten Druckfeder 45 nach hinten gedrückt: D. h. die Anschlagscheibe drückt nicht mehr gegen den Gewindering 33, wie dies in der Figur 3 gut sichtbar ist.

In dem in Figur 4 dargestellten nächsten Schritt, dem dritten Wegabschnitt, wird die zur Verspannung zwischen Hohlschaft 5 und Zentrieraufnahme 3 erforderliche (Axial-)Spannkraft erzeugt. Außerdem wird eine Selbsthemmung des Spannsystems erzeugt.

Während der weiteren axialen Bewegung des Zugbolzens 13 nach hinten, bewegen sich die vorderen Nase 27 auf dem ersten zylindrischen Bereich 101 des Zugbolzens 13. Der zweite und der dritte Konusabschnitt 107, 109 des Zugbolzens 13 werden weiter in die Spannsegmente 25 hineingezogen.

Je nach Ausführung der Spannrille 7 kann der erste zylindrische Bereich 101 auch als Konus mit einem positiven Neigungswinkel α mit einem Betrag kleiner oder gleich 4° ausgebildet werden, um die Relation zwischen dem Weg des Zugbolzens 13 und dem axialen Spannweg der Spannsegmente 25 noch weiter zu verbessern. Es ist aber auch möglich, den ersten zylindrischen Abschnitt 101 als Konus mit einem negativen Neigungswinkel α mit einem Betrag kleiner oder gleich 2° auszubilden, um die Selbsthemmung im späteren Verlauf des Spannvorgangs zu verstärken.

Im Bereich der vorderen Spannklauen 31 findet in dem dargestellten Ausführungsbeispiel mit einem zylindrischen ersten Zylinderabschnitt zwischen Spannklauen 31 und Spannrille 7 zuerst eine axiale Bewegung bis zur Spannposition und anschließend keine axiale Verschiebung mehr statt. Der vordere Bereich der Spannsegmente 25 (vordere Nase 27, vordere Spannklaue 31) ist jetzt als Gelenk zu betrachten.

Die hinteren Nasen 29 der Spannsegmente 25 werden mit fortschreitender Bewegung des Zugbolzens 13 nicht mehr vom dritten Konusabschnitt 109 nach außen gedrückt, sondern vom zweiten Konusabschnitt 107.

Der zweite Konusabschnitt 107 hat einen viel kleineren Neigungswinkel als der dritte Konusabschnitt 109. Der zweite Konusabschnitt 107 hat idealerweise einen Neigungswinkel von kleiner arctan(µ). "µ" ist der Reibungskoeffizient der Werkstoffpaarung von Spannsegmenten 25 und Zugbolzen 13. In vielen Fällen (und bei normalen Reibungsverhältnissen) ist ein Neigungswinkel von 3° bis 4° gut geeignet. Durch den Einsatz von (DLC-)Beschichtungen oder gezielte Schmierung kann oder muss dieser Bereich funktionstechnisch angepasst werden.

Durch die Neigung auf dem zweiten Konusabschnitt werden die hinteren Nasen 29 der Spannsegmente 25 radial weiter nach außen bewegt.

Die Keilwirkung zwischen hinterer Spannklaue 41, bzw. der fünften Kontaktfläche 133, und dem Konus 43 des Gewinderings 33 führt erst zu einer axialen Bewegung bis zur Spannposition und anschließend zu einer in axialer Richtung wirkenden Spannkraft in den Spannsegmenten 25, die über die vorderen Spannklauen 31 und die Spannrille 7 aufgenommen und in den Hohlschaft 5 bzw. den Adapter 1 eingeleitet wird. Durch diese hohe Spannkraft kommt es zu der gewünschten axialen Verspannung zwischen Hohlschaft 7 und Zentrieraufnahme 3.

In der Figur 5 ist das erfindungsgemäße Spannsystem in der Spannstellung mit Selbsthemmung dargestellt.

Die Betätigungseinheit (hier der Zylinderaufbau mit dem Kolben 15 und dem Zylinder 21) hat die notwendige Betätigungskraft aufgebaut und kann jetzt kraftfrei werden. Im Falle des Zylinderaufbaus kann der Fluiddruck gesenkt oder drucklos werden.

Die Spannsegmente 25 sind über die vorderen Spannklauen 31 in der Spannrille 7 formschlüssig mit dem Adapter 1 bzw. dessen Hohlschaft 5 verbunden.

Gleichzeitig liegen die vorderen Nasen 27 am ersten zylindrischen Abschnitt 101 des Zugbolzens 13 an. In radialer Richtung ist der vordere Bereich der Spannsegmente 25 somit abgestützt.

Die hinteren Spannklauen 41 der Spannsegmente 25 liege am Innenkonus 43 des Gewinderings 33 an. Gleichzeitig liegen die hinteren Nasen 29 der Spannzangensegmente 25 am zweiten Konusabschnitt 107 des Zugbolzens 13 an.

Dadurch entsteht, wie bereits im Zusammenhang mit der Figur 4 erläutert, eine große axiale Spannkraft in den Spannsegmenten 25. Somit werden die Spannsegmente 25 auf Zug belastet; d. h. der hintere Bereich der Spannsegmente 25 zieht am vorderen Bereich der Spannsegmente 25 und über den Formschluss in der Spannrille 7 damit auch am Adapter 1. Es kommt zu der gewollten axialen Verspannung mit hoher Spannkraft zwischen Hohlschaft 5 und Zentrieraufnahme 3.

Bedingt durch die in diesem Beispiel konische und sogar unrunde Ausführung (ISO 26623, Capto) der Schnittstelle zwischen Adapter und Zentrieraufnahme kommt es zu einer Verspannung der Bauteile in axialer, radialer und rotatorischer Richtung. Bei Systemen mit Plananlagen (z.B. ISO 26623 und ISO 12164) auch zur Vorspannung der selbigen.

Darüber hinaus bewirkt der Neigungswinkel des Konus 43 aber auch große radiale Kräfte auf die hinteren Spannklauen 41, welche diese über die hinteren Nasen 29 auf den zweiten Konusabschnitt 107 des Zugbolzens 13 übertragen.

Weil der Neigungswinkel des zweiten Konusabschnitts 107 erfindungsgemäß sehr klein gewählt wird, bewirken die von den hinteren Nasen 29 auf den zweiten Konusabschnitt 107 des Zugbolzens 13 übertragenen Radialkräfte, dass der Zugbolzen 13 in dieser Position arretiert wird. Ohne eine äußere Kraft kann der Zugbolzen 13 seine Position relativ zu den Spannsegmenten 25 und dem Adapter 1 nicht ändern. Das heißt es findet eine Selbsthemmung des erfindungsgemäßen Spannsystems in der Spannstellung statt.

Das bedeutet, dass der Zylinderaufbau nach erfolgtem Spannvorgang drucklos sein kann; ebenso wird keine Feder benötigt, die dauernd eine Betätigungskraft auf den Zugbolzen 13 in Richtung der Spannstellung ausübt.

Das ist sehr vorteilhaft, weil eine Versorgung des Zylinderaufbaus mit unter Druck stehendem Hydraulikfluid während die Spindel 37 angetrieben wird und sich dreht, entfallen kann.

Die Versorgung des Zylinderaufbaus mit unter Druck stehendem Hydraulikfluid während sich die Spindel 37 dreht ist technisch sehr anspruchsvoll und benötigt viel Bauraum.

Aufgrund der selbsthemmenden Ausführung im Bereich des zweiten Konusabschnitts bleibt die initiierte Spannkraft erhalten, auch wenn die Betätigungskraft des Zylinderaufbaus auf null abfällt.

Die Spannkraft ist durch die Kraftverstärkung des erfindungsgemäßen Spannsystems 3- bis 4-mal größer als die vom Zylinderaufbau aufgebrachte Betätigungskraft in Zugrichtung.

In der Figur 6 ist ein weiteres Ausführungsbeispiel dargestellt, das funktional dem ersten Ausführungsbeispiel entspricht. Ein Unterschied besteht darin, dass die Zentrieraufnahme 3 nicht als separates Bauteil ausgeführt ist, sondern in das Spindelgehäuse 37 integriert ist.

Bei diesem Ausführungsbeispiel ist das gesamte Spannsystem so kompakt ausgeführt, dass es durch den inneren Durchmesser der Zentrieraufnahme 3, d. h. von vorne, montiert werden kann. Dies ermöglicht es, die Zentrieraufnahme mit den umgebenden Teilen des Werkzeughalters einteilig auszuführen und auf den zweiteiligen Aufbau zu verzichten.

In den Figuren 9 und 10 ist eine "Fehlspannung" eines Adapters 1 dargestellt. Anhand dieser Figuren wird die vorteilhafte Eigenschaft des erfindungsgemäßen Spannsystems erläutert, in einem solchen Fall nach hinten auszuweichen und dadurch eine Beschädigung des Spannsystems zu verhindern.

In der Figur 9 ist der Adapter 1 nicht weit genug in die Zentrieraufnahme 3 geschoben worden, so dass die vorderen Spannklauen 31 nicht in die Spannrille des Hohlschafts 5 eintauchen können; sie werden in ihrer Bewegung radial nach außen durch den Hohlschaft 5 behindert.

Das hat zur Folge, dass die vorderen Nasen 27 nicht auf den ersten Zylinderabschnitt 101 des Zugbolzens 13 gelangen. Sie bleiben auf dem ersten Konusabschnitt 103 und machen die Axialbewegung des Zugbolzens 13 mit. In Folge dessen drücken die Spannsegmente 25 so stark gegen die Zwischenscheibe 47, dass diese die Druckfeder 45 zusammendrückt. In Folge dessen können die Spannsegmente 25 im Falle einer Fehlspannung nach hinten ausweichen und werden nicht beschädigt.

In der Figur 10 sind wegen der der Übersichtlichkeit keine Bezugszeichen eingetragen. In der Figur 10 ist der Zugbolzen 13 verglichen mit der Figur 9 weiter nach hinten gewandert und hat die Spannsegmente 25 gegen die Kraft der Druckfeder 45 mitgenommen, bis die vorderen Spannklauen 31 am Ende des Hohlschafts 5 bzw. der Einführfase am Hohlschaft 5 wieder radial nach außen wandern und somit die Spannsegmente 25 vom ersten Konusabschnitt 103 auf den ersten zylindrischen Abschnitt 101 gleiten können. Sobald dies geschehen ist, sind die Spannsegmente 25 unabhängig von der Bewegung des Zugbolzens 13 und können frei auf dem zylindrischen Abschnitt 101 gleiten. Durch die Druckbeaufschlagung der Druckfeder 45 (mit oder ohne Zwischenscheibe 47) werden die Spannsegmente 25 in Richtung des Adapters 1 gedrückt und stoßen den Adapter 1 aus der Zentrieraufnahme 3.

Dies erfolgt über die Federkraft der Druckfeder 45. Bei anderen Systemen gibt es diese integrierte Notfunktion nicht. Diese Notfunktion ist ein großer Vorteil, da bei den anderen Systemen die Segmente nicht ausreichend ausweichen können und durch die im System vorhandenen Kräfte zerstört oder massiv beschädigt werden.

Die intergierte Notfunktion kann unter anderem bei nachfolgend erläutertem Fehlerbeispiel Gefahren und Beschädigungen wirksam verhindern:
Annahme: Der Adapter 1 wird in die Zentrieraufnahme 3 gezogen, obwohl die Spannsegmente 25 nicht an der richtigen Position, d.h. in der Spannrille 7, sind. Dies hätte zur Folge, dass es so aussieht als ob das System richtig gespannt ist obwohl keine Verspannung vorhanden ist und der Adapter durch Bearbeitungskräfte herausfallen kann. Durch den erfindungsgemäßen Aufbau wird auch dieser Fall verhindert!

Das Ausstoßen verhindert auch, dass der Adapter 1 ungespannt in der Zentrieraufnahme 3 verbleibt und sich die Plananlagen von 1 und 3 berühren.

Besonders wichtig ist dieser Notausstoß, da er im automatischen Betrieb eine direkte Rückmeldung ermöglicht, ob korrekt gespannt wurde. Dies wird häufig durch eine sogenannte Plan-Anlagen-Kontrolle realisiert, bei der überprüft wird ob die Planfläche 9 des Adapters 1 und die Planfläche der Zentrieraufnahme 3 sich berühren.

In der Figur 11 wird ein weiteres Ausführungsbeispiel im Schnitt und ohne Adapter 1 dargestellt. In der unteren Hälfte ist der gelöste Zustand und in der oberen Hälfte ist der geschlossene Zustand dargestellt. Dieses Ausführungsbeispiel entspricht in seiner Gestaltung und Funktionalität weitestgehend dem ersten Beispiel der Figuren 1 bis 5, so dass diesbezüglich auf die Beschreibung des ersten Ausführungsbeispiels Bezug genommen wird. Es sind nur die zur Erläuterung der zusätzlichen Details und Funktionen notwendigen Bezugszeichen eingetragen.

Die Änderung betrifft im Wesentlichen die Art der Vorspannung der Spannsegmente 25 im gelösten Zustand. Damit wird (wie auch bei dem ersten Ausführungsbeispiel) erreicht, dass die Spannsegmente 25 mit ihren Innenseiten auf dem Außendurchmesser des Zugbolzens 13 aufliegen. Jedoch werden hier die Spannsegmente 25 durch die Druckkraft der Feder 45 so belastet, dass es zur beschriebenen Auflage kommt.

Die Druckfeder 45 im hinteren Bereich stützt sich zum einen an einer Stirnseite der Druckfederhülse 49 ab und drückt in dem dargestellten Zustand der Figur gegen die Zwischenscheibe 47. Die Zwischenscheibe 47 wiederum liegt bei diesem Ausführungsbeispiel im geöffneten Zustand nicht an dem Gewindering 33 an, sondern ist in der Druckfederhülse 49 geführt und drückt immer auf die Spannsegmente 25. Der Innendurchmesser der Zwischenscheibe 47 ist bei diesem Ausführungsbeispiel größer als bei dem in den Figuren 1 bis 6 dargestellten ersten Ausführungsbeispiel. Dadurch kann die Anschlagscheibe 11 einteilig mit dem Zugbolzen 13 verbunden werden, weil diese jetzt durch die Bohrung der Zwischenscheibe 47 passt.

In dem Detail Y ist das hintere Ende eines Spannsegments 25 vergrößert dargestellt. Wie sich aus dieser Darstellung ergibt, weist das Spannsegment 25 im Bereich der hinteren Nase 29 einen sich in axialer Richtung erstreckenden Vorsprung 30 auf. Dieser Vorsprung 30 hat im dargestellten eingebauten Zustand keinen Kontakt mit der Druckfeder 45 und der Zwischenscheibe 47. Er dient der Verkürzung der Baulänge, da die Zwischenscheibe 47 oberhalb des Vorsprungs 30 angeordnet ist und damit gleichzeitig die Zwischenscheibe 47 eine Montagehilfe für die Spannsegmente 25 ist, da diese über den Innendurchmesser während der Montage vorzentriert werden.

Wie sich aus dem Detail Z ergibt, ist die Zwischenscheibe 47 auf ihrer dem Spannsegment zugewandten Seite kegelstumpfförmig (siehe den Winkel β im Detail Z) ausgebildet. Die dadurch entstehende kegelstumpfförmige Fläche hat das Bezugszeichen 142. Diese Schrägstellung führt dazu, dass die Kontaktfläche zwischen Spannsegment 25 und der Zwischenscheibe 47 an den Außendurchmesser der Zwischenscheibe 47 und an den radial äußersten Punkt der hinteren Spannklaue 41 verlagert wird (siehe das Detail Z).

Dadurch ergibt sich ein maximaler Hebelarm von der Kontaktfläche zum Drehpunkt an der Berührstelle der hinteren Nase 29 zum Zugbolzen 13. Die Spannsegmente 25 werden gleichzeitig gegen den Konus 43 gedrückt. Durch das so entstehende Gesamtdrehmoment um die Berührstellen werden die Spannsegmente 25 immer so verschwenkt, dass auch die vordere Nase 27 gegen den Zugbolzen 13 gedrückt wird. Dies gilt nicht nur für die in der Figur 11 dargestellten Endstellungen des Zugbolzens 13, sondern auch für alle nicht dargestellten Zwischenstellungen.

Der Winkel β der kegelstumpfförmigen Fläche 142 wird etwas größer gewählt als der Schwenkwinkel des Spannsegments 25 zwischen gespanntem Zustand und gelöstem Zustand, damit die Spannsegmente 25 in jeder Stellung am radial äußersten Punkt der hinteren Spannklaue 41 anliegen.

Alternativ oder zusätzlich ist es auch möglich, im Bereich der hinteren Spannklaue 41 das hintere Ende des Spannsegments 25 leicht anzuschrägen (siehe den Winkel β im Detail Y). Die Schräge 141 hat den gleichen Effekt wie die kegelstumpfförmige Ausgestaltung 142 der Zwischenscheibe 47 auf ihrer den Spannsegmenten 25 zugewandten Seite. Oftmals kann dadurch die Spannfeder 39 des ersten Ausführungsbeispiels entfallen. Weil die Schräge 141 der Spannklaue 41 und die kegelstumpfförmige Ausgestaltung 142 der Zwischenscheibe 47 die gleiche Funktion haben, wurde bei der Beschreibung beider Beispiele der Winkel β verwandt.

In dem Zugbolzen 13 ist ein Absatz 48 / ein Durchmessersprung ausgebildet, der als (hinterer) Anschlag für die Spannsegmente 25 dient. Wie sich in der Figur 11 gut erkennen lässt, wirkt der Absatz 48 mit der hinteren Nase 29. Der Absatz 48 sorgt dafür, dass die Spannsegmente 25 im geöffneten Zustand nicht relativ zueinander in axialer Richtung verschoben werden können. Zum Beispiel, wenn ein Adapter 1 versehentlich "schräg" in die Zentrieraufnahme 3 eingeführt wird und dadurch in Kontakt mit einzelnen Spannsegment(en) 25 kommt, können diese nicht versehentlich nach hinten geschoben werden, sondern bleiben am vorgesehenen Ort. Um ein Verspannen des Systems zu vermeiden ist der Absatz 48 um wenige 1/10mm nach hinten verschoben und hat im Normalfall keinen Kontakt zu den Spannsegmenten 25.

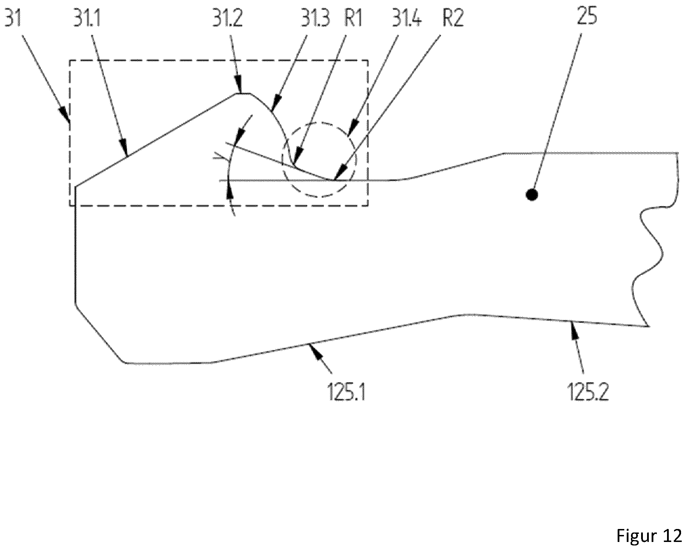

In der Figur 12 wird das vordere Ende eines weiteren Ausführungsbeispiels eines Spannsegments 25 dargestellt. Es handelt sich hierbei um eine Ausführung des Spannsegments 25 für einen Adapter 1, der eine Spannrille 7 mit einem kreisbogenförmigen Querschnitt aufweist. Solche Spannrillen sind zum Beispiel bei Spannsystemen nach ISO 26623 (Coromant Capto) vorhanden.

Die vordere Klaue 31 umfasst eine Schräge 31.1, welche an eine Einführschräge des Adapters 1 (nicht dargestellt) angepasst ist. Bei einer Fehlspannung liegen die Spannsegmente 25, nachdem sie vom Zugbolzen 13 nach hinten mitgenommen wurden, schon mit dieser Schräge 31.1 an der Einführschräge des Adapters 1 an und können radial nach außen ausweichen, bis sie vom ersten Konusabschnitt (103) auf den ersten zylindrischen Abschnitt (101) gleiten können. In Folge dessen muss für diese Funktion nicht die gesamte Spannklaue 31 axial aus dem Adapter 1 gezogen werden. Das hat den Vorteil, dass der Federweg der Feder 45 kleiner als bei dem in Figur 10 dargestellten Ausführungsbeispiel gewählt werden kann. Trotzdem kann die Feder 45 den Adapter 1 auswerfen. Dies reduziert die nötige Federlänge und damit auch die Gesamtbaulänge.

Dort wo die vordere Klaue 31 ihren größten Durchmesser hat (siehe 31.2), ist sie zylindrisch. An diesen kurzen zylindrischen Abschnitt 31.2 schließt ein Radius 31.3 an.

Der zylindrische Abschnitt 31.2 verhindert, ein ungewolltes radiales Verklemmen der Spannsegmente 25 zwischen dem Nutgrund der Spannrille 7 und der Fläche 101 des Zugbolzens 13. Typischerweise wird der Außendurchmesser des Radius 31.3 um 1/10mm abgedreht.um den zylindrischen Abschnitt 31.2 herzustellen.

Der Radius 31.3 ist so gewählt, dass er immer dem kleinsten möglichen Radius der Spannrille 7 des Adapters 1 entspricht. Hierdurch wird der Anlagepunkt des oder der Spannsegmente 25 an die Spannrille 7 möglichst nahe an den kleinsten Durchmesser der Spannrille 7 gebracht. Das reduziert die auf die Spannsegmente 25 wirkenden Hebelkräfte und verbessert den Kraftfluss.

Der Bereich 31.4 ist so ausgelegt, dass er Freiräume in der Innenkontur des Adapters 1 optimal ausnutzt und den Kraftfluss langsam über die Schräge mit dem Winkel γ, der vorzugweise zwischen 10 und 20° liegt und die angrenzenden Radien R1 und R2 umlenkt. Dadurch werden lokale Spannungsspitzen reduziert, die Dauerfestigkeit der Spannsegmente 25 erhöht und die Gefahr eines spontanen Bauteilversagens aufgrund der axialen Spannkräfte deutlich verringert.

Die Schrägen 125.1 und 125.2 an der Innenseite des Spannsegments 25 sind so ausgelegt, dass die Querschnitte in den Spannsegmenten 25 maximal sind, ohne dass sie dabei in der Offenstellung (siehe Figur 11 unterhalb der Mittellinie) am Zugbolzen 13 anliegen oder das Zusammenklappen der Spannsegmente 25 zur Offenstellung behindern. Auch dadurch werden die Spannungen in den Spannsegmenten 25 reduziert und die Dauerfestigkeit der Spannsegmente 25 erhöht.

## Patentansprüche

1. Spannvorrichtung für einen Hohlschaft (5), insbesondere einem Hohlschaftkegel mit einer kreisrunden oder polygonalen Außenkontur, umfassend ein oder mehrere Spannsegmente (25) und einen mit den Spannsegmenten (25) zusammenwirkenden Zugbolzen (13), wobei jedes Spannsegment (25) an einem vorderen Ende (VE) an seiner Außenseite eine vordere Spannklaue (31) und an seiner mit dem Zugbolzen (13) zusammenwirkenden Innenseite eine vordere Nase (27) aufweist, wobei jedes Spannsegment (25) an einem hinteren Ende (HE) an seiner Außenseite eine hintere Spannklaue (41) und an seiner mit dem Zugbolzen (13) zusammenwirkenden Innenseite eine hintere Nase (29) aufweist, wobei in der Spannstellung die vordere Spannklaue (31) jedes Spannsegments (25) in eine Spannrille (7) des Hohlschafts (5) eingreift und die hintere Spannklaue (41) gegen einen Konus (43) gepresst wird, wobei in der Offenstellung die vordere(n) Spannklaue(n) (31) ohne Eingriff in die Spannrille (7) des Hohlschafts (5) sind, wobei der Zugbolzen (13) durch axiales Verschieben das oder die Spannsegmente (25) von der Spannstellung in die Offenstellung und von der Offenstellung in die Spannstellung bewegt, wobei das oder die Spannsegmente (25) beim Übergang von der Offenstellung zu der Spannstellung eine erste Schwenkbewegung ausführen, so dass die vorderen Spannklauen (31) der Spannsegmente (25) formschlüssig in die Spannrille (7) eingreifen und ein Gelenk für eine nachfolgende zweite Schwenkbewegung des oder der Spannsegmente (25) bilden, wobei während der zweiten Schwenkbewegung die hinteren Nasen (29) des oder der Spannsegmente (25) auf einem dritten Konusabschnitt (109) des Zugbolzens (13) gleiten und die hinteren Spannklauen (41) der Spannsegmente (25) gegen den Konus (43) des Umbauteils/der Spindel (37) pressen und das oder die Spannsegmente (25) axial verspannen, **dadurch gekennzeichnet, dass** bei einer an die zweite Schwenkbewegung anschließenden weiteren axialen Bewegung des Zugbolzens (13) die hinteren Nasen (29) des oder der Spannsegmente (25) auf einem zweiten Konusabschnitt (107) des Zugbolzens (13) gleiten, so dass eine Selbsthemmung zwischen den Spannsegmenten (25) und dem Zugbolzen (13) entsteht.

2. Spannvorrichtung nach Anspruch 1, **dadurch gekennzeichnet, dass** an dem Zugbolzen (13) beginnend an seinem vorderen Ende (VE) nacheinander ein erster zylindrischer Abschnitt (101), ein erster Konusabschnitt (103), ein zweiter zylindrischer Abschnitt (105), der zweite Konusabschnitt (107), der dritte Konusabschnitt (109) und ein dritter zylindrischer Abschnitt (111) ausgebildet sind.

3. Spannvorrichtung nach einem der vorhergehenden Ansprüche, **dadurch gekennzeichnet, dass** ein Neigungswinkel des zweiten Konusabschnitts (107) kleiner als 5° oder kleiner als der Arcustangens (arctan) des Reibungskoeffizienten (µ) der Paarung der Kontaktflächen von Spannsegment (25) und Zugbolzen (13) ist.

4. Spannvorrichtung nach einem der vorhergehenden Ansprüche, **dadurch gekennzeichnet, dass** der Neigungswinkel des zweiten Konusabschnitts (107) in einem Bereich zwischen 3° und 5° liegt.

5. Spannvorrichtung nach einem der vorhergehenden Ansprüche, **dadurch gekennzeichnet, dass** ein Neigungswinkel des ersten Konusabschnitts (103) und/oder ein Neigungswinkel des dritten Konusabschnitts (109) in einem Bereich zwischen 30° und 60° liegt.

6. Spannvorrichtung nach Anspruch 5, **dadurch gekennzeichnet, dass** der Neigungswinkel des ersten Konusabschnitts (103) und/oder der Neigungswinkel des dritten Konusabschnitts (109) 45° beträgt.

7. Spannvorrichtung nach einem der vorhergehenden Ansprüche, **dadurch gekennzeichnet, dass** der zweite Konusabschnitt (107) und der dritte Konusabschnitt (109) ohne Durchmessersprung und ohne zylindrischen Zwischenabschnitt ineinander übergehen.

8. Spannvorrichtung nach einem der vorhergehenden Ansprüche, **dadurch gekennzeichnet, dass** die vorderen Nasen (27) des oder der Spannsegmente (25) beginnend an dem vorderen Ende (VE) eine auf den Neigungswinkel des ersten Konusabschnitts (103) abgestimmte erste Kontaktfläche (121) und eine auf den ersten zylindrischen Abschnitt (101) abgestimmte zweite Kontaktfläche (123) aufweisen.

9. Spannvorrichtung nach einem der vorhergehenden Ansprüche, **dadurch gekennzeichnet, dass** die hinteren Nasen (29) des oder der Spannsegmente (25) eine auf den Neigungswinkel des dritten Konusabschnitts (109) abgestimmte dritte Kontaktfläche (129) aufweisen.

10. Spannvorrichtung nach einem der vorhergehenden Ansprüche, **dadurch gekennzeichnet, dass** die hinteren Nasen (29) des oder der Spannsegmente (25) eine auf den Neigungswinkel des zweiten Konusabschnitts (107) abgestimmte vierte Kontaktfläche (131) aufweisen.

11. Spannvorrichtung nach einem der vorhergehenden Ansprüche, **dadurch gekennzeichnet, dass** die hinteren Spannklauen (41) eine fünfte Kontaktfläche (133) aufweisen, und dass die fünfte Kontaktfläche (133) auf den Neigungswinkel des Konus (43) abgestimmt ist.

12. Spannvorrichtung nach einem der vorhergehenden Ansprüche, **dadurch gekennzeichnet, dass** der Neigungswinkel des Konus (43) und/oder der fünften Kontaktfläche (133) der Spannsegmente (25) in einem Bereich von 20° bis 45°, und bevorzugt bei 30° oder bei 35° liegt.

13. Spannvorrichtung nach einem der vorhergehenden Ansprüche, **dadurch gekennzeichnet, dass** sich das oder die Spannsegmente (25) mit ihrem hinteren Ende gegen eine federbelastete Zwischenscheibe (47) oder direkt gegen eine Druckfeder (45) abstützen, so dass die Spannsegmente (25) in axialer Richtung ausweichen können, wenn sie nicht von dem ersten Konusabschnitt (103) auf den ersten zylindrischen Abschnitt (101) gleiten können.

14. Spannvorrichtung nach einem der vorhergehenden Ansprüche, **dadurch gekennzeichnet, dass** an dem vorderen Ende (VE) des Zugbolzens (13) eine Anschlagscheibe (11) vorhanden ist.

15. Spannvorrichtung nach einem der vorhergehenden Ansprüche 2 bis 14, **dadurch gekennzeichnet, dass** der erste zylindrische Abschnitt (101) einen betragsmäßig kleinen negativen Neigungswinkel α aufweist.

16. Spannvorrichtung nach einem der vorhergehenden Ansprüche 13 bis 15, **dadurch gekennzeichnet, dass** die Zwischenscheibe (47) auf ihrer dem Spannsegment (25) zugewandten Seite kegelstumpfförmig (142) ausgebildet ist.

17. Spannvorrichtung nach einem der Ansprüche 13 bis 16, **dadurch gekennzeichnet, dass** Spannsegmente 25 an ihren hinteren Enden zumindest bereichsweise eine Schräge (141) aufweisen

18. Spannvorrichtung nach einem der vorhergehenden Ansprüche, **dadurch gekennzeichnet, dass** an dem Zugbolzen (13) ein Absatz (48) ausgebildet ist, der als Anschlag für die Spannsegmente (25) dient.

19. Spannvorrichtung nach einem der vorhergehenden Ansprüche, **dadurch gekennzeichnet, dass** der Konus (43) in das Umbauteil oder die Spindel (37) integriert oder als separates Bauteil ausgeführt ist.

20. Spannvorrichtung nach einem der vorhergehenden Ansprüche, **dadurch gekennzeichnet, dass** sie Teil eines angetriebenen oder stehenden Werkzeughalters ist.

21. Spannvorrichtung nach einem der vorhergehenden Ansprüche, **dadurch gekennzeichnet, dass** sie auf einem Revolver einer Drehmaschine zum Einsatz kommt.

## Claims

1. A clamping device for a hollow shaft (5), in particular a hollow shaft taper with a circular or polygonal outer contour, comprising one or more clamping segments (25) and a tension bolt (13) cooperating with the clamping segments (25), wherein each clamping segment (25) has a front clamping claw (31) at a front end (VE) on its outer side and a front lug (27) on its inner side cooperating with the tension bolt (13), wherein each clamping segment (25) has a rear clamping claw (41) at a rear end (HE) on its outer side and a rear lug (29) on its inner side cooperating with the tension bolt (13), wherein, in the clamping position, the front clamping claw (31) of each clamping segment (25) engages in a clamping groove (7) of the hollow shaft (5) and the rear clamping claw (41) is pressed against a cone (43), wherein, in the open position, the front clamping claw(s) (31) do/does not engage in the clamping groove (7) of the hollow shaft (5), wherein, by means of axial displacement, the tension bolt (13) moves the clamping segment or segments (25) from the clamping position into the open position and from the open position to the clamping position, wherein the clamping segment or segments (25) perform(s) a first pivoting movement during the transition from the open position to the clamping position, such that the front clamping claws (31) of the clamping segments (25) engage in a positively-locking manner in the clamping groove (7) and form a joint for a subsequent second pivoting movement of the clamping segment or segments (25), wherein, during the second pivoting movement, the rear lugs (29) of the clamping segment or segments (25) slide on a third cone section (109) of the tension bolt (13) and press the rear clamping claws (41) of the clamping segments (25) against the cone (43) of the adjacent part/spindle (37) and axially clamp the clamping segment or segments (25), **characterized in that,** during a further axial movement of the tension bolt (13) following the second pivoting movement, the rear lugs (29) of the clamping segment or segments (25) slide on a second cone section (107) of the tension bolt (13), such that a self-locking effect is produced between the clamping segments (25) and the tension bolt (13).

2. The clamping device according to claim 1, **characterized in that** a first cylindrical section (101), a first cone section (103), a second cylindrical section (105), the second cone section (107), the third cone section (109), and a third cylindrical section (111) are successively formed on the tension bolt (13), starting at its front end (VE).

3. The clamping device according to one of the preceding claims, **characterized in that** an angle of inclination of the second cone section (107) is less than 5° or less than the arc tangent (arctan) of the coefficient of friction (µ) of the pairing of the contact surfaces of the clamping segment (25) and the tension bolt (13).

4. The clamping device according to one of the preceding claims, **characterized in that** the angle of inclination of the second cone section (107) is in a range between 3° and 5°.

5. The clamping device according to one of the preceding claims, **characterized in that** an angle of inclination of the first cone section (103) and/or an angle of inclination of the third cone section (109) is in a range between 30° and 60°.

6. The clamping device according to claim 5, **characterized in that** the angle of inclination of the first cone section (103) and/or the angle of inclination of the third cone section (109) is 45°.

7. The clamping device according to one of the preceding claims, **characterized in that** the second cone section (107) and the third cone section (109) merge into one another without a diameter change and without an intermediate cylindrical section.

8. The clamping device according to one of the preceding claims, **characterized in that** the front lugs (27) of the clamping segment or segments (25), starting at the front end (VE), have a first contact surface (121) matched to the angle of inclination of the first cone section (103) and a second contact surface (123) matched to the first cylindrical section (101).

9. The clamping device according to one of the preceding claims, **characterized in that** the rear lugs (29) of the clamping segment or segments (25) have a third contact surface (129) matched to the angle of inclination of the third cone section (109).

10. The clamping device according to one of the preceding claims, **characterized in that** the rear lugs (29) of the clamping segment or segments (25) have a fourth contact surface (131) matched to the angle of inclination of the second cone section (107).

11. The clamping device according to one of the preceding claims, **characterized in that** the rear clamping claws (41) have a fifth contact surface (133), **and in that** the fifth contact surface (133) is matched to the angle of inclination of the cone (43).

12. The clamping device according to one of the preceding claims, **characterized in that** the angle of inclination of the cone (43) and/or of the fifth contact surface (133) of the clamping segments (25) is in a range of 20° to 45°, and preferably at 30° or at 35°.

13. The clamping device according to one of the preceding claims, **characterized in that** the clamping segment or segments (25) are supported with their rear end against a spring-loaded intermediate disk (47) or directly against a compression spring (45), such that the clamping segments (25) can deflect in the axial direction if they cannot slide from the first cone section (103) onto the first cylindrical section (101).

14. The clamping device according to one of the preceding claims, **characterized in that** a stop disk (11) is provided at the front end (VE) of the tension bolt (13).

15. The clamping device according to one of the preceding claims 2 to 14, **characterized in that** the first cylindrical section (101) has a negative angle of inclination α of small magnitude.

16. The clamping device according to one of the preceding claims 13 to 15, **characterized in that** the intermediate disk (47) is formed to be frustoconical (142) on its side facing the clamping segment (25).

17. The clamping device according to one of claims 13 to 16, **characterized in that** clamping segments 25 have a chamfer (141) at their rear ends, at least in some regions.

18. The clamping device according to one of the preceding claims, **characterized in that** an offset (48) is formed on the tension bolt (13), which offset serves as a stop for the clamping segments (25).

19. The clamping device according to one of the preceding claims, **characterized in that** the cone (43) is integrated into the adjacent part or the spindle (37) or is designed as a separate component.

20. The clamping device according to one of the preceding claims, **characterized in that** it is part of a driven or stationary tool holder.

21. The clamping device according to one of the preceding claims, **characterized in that** it is used on a turret of a lathe.

## Revendications

1. Dispositif de serrage pour une tige creuse (5), en particulier un cône à tige creuse avec un contour extérieur circulaire ou polygonal, comprenant un ou plusieurs segments de serrage (25) et un boulon de traction (13) coopérant avec les segments de serrage (25), dans lequel chaque segment de serrage (25) présente à une extrémité avant (VE) sur son côté extérieur une griffe de serrage avant (31) et sur son côté intérieur coopérant avec le boulon de traction (13) un ergot avant (27), dans lequel chaque segment de serrage (25) présente à une extrémité arrière (HE) sur son côté extérieur une griffe de serrage arrière (41) et sur son côté intérieur coopérant avec le boulon de traction (13) un ergot arrière (29), dans lequel dans la position de serrage, la griffe de serrage avant (31) de chaque segment de serrage (25) s'insère dans une rainure de serrage (7) de la tige creuse (5) et la griffe de serrage arrière (41) est pressée contre un cône (43), dans lequel dans la position ouverte, la ou les mâchoires de serrage avant (31) ne sont pas insérées dans la rainure de serrage (7) de la tige creuse (5), dans lequel le boulon de traction (13) déplace par coulissement axial le ou les segments de serrage (25) de la position de serrage à la position ouverte et de la position ouverte à la position de serrage, dans lequel le ou les segments de serrage (25) effectuent un premier mouvement de pivotement lors du passage de la position ouverte à la position de serrage, de sorte que les griffes de serrage avant (31) des segments de serrage (25) s'insèrent par complémentarité de formes dans la rainure de serrage (7) et forment une articulation pour un deuxième mouvement de pivotement ultérieur du ou des segments de serrage (25), dans lequel, pendant le deuxième mouvement de pivotement, les ergots arrière (29) du ou des segments de serrage (25) glissent sur une troisième partie conique (109) du boulon de traction (13) et pressent les griffes de serrage arrière (41) des segments de serrage (25) contre le cône (43) de la pièce de transformation/de la broche (37) et serrent axialement le ou les segments de serrage (25), **caractérisé en ce que**, lors d'un mouvement axial supplémentaire du boulon de traction (13) faisant suite au deuxième mouvement de pivotement, les ergots arrière (29) du ou des segments de serrage (25) glissent sur une deuxième partie conique (107) du boulon de traction (13), de sorte qu'il se produit un autoblocage entre les segments de serrage (25) et le boulon de traction (13).

2. Dispositif de serrage selon la revendication 1, **caractérisé en ce qu'**une première partie cylindrique (101), une première partie conique (103), une deuxième partie cylindrique (105), la deuxième partie conique (107), la troisième partie conique (109) et une troisième partie cylindrique (111) sont réalisées successivement sur le boulon de traction (13) en commençant à son extrémité avant (VE).

3. Dispositif de serrage selon l'une quelconque des revendications précédentes, **caractérisé en ce qu'**un angle d'inclinaison de la deuxième partie conique (107) est inférieur à 5° ou inférieur à l'arc tangente (arctan) du coefficient de frottement (µ) de l'appariement des surfaces de contact du segment de serrage (25) et du boulon de traction (13).

4. Dispositif de serrage selon l'une quelconque des revendications précédentes, **caractérisé en ce que** l'angle d'inclinaison de la deuxième partie conique (107) se situe dans une plage comprise entre 3° et 5°.

5. Dispositif de serrage selon l'une quelconque des revendications précédentes, **caractérisé en ce qu'**un angle d'inclinaison de la première partie conique (103) et/ou un angle d'inclinaison de la troisième partie conique (109) se situe dans une plage comprise entre 30° et 60°.

6. Dispositif de serrage selon la revendication 5, **caractérisé en ce que** l'angle d'inclinaison de la première partie conique (103) et/ou l'angle d'inclinaison de la troisième partie conique (109) est de 45°.

7. Dispositif de serrage selon l'une quelconque des revendications précédentes, **caractérisé en ce que** la deuxième partie conique (107) et la troisième partie conique (109) se rejoignent sans saut de diamètre et sans partie intermédiaire cylindrique.

8. Dispositif de serrage selon l'une quelconque des revendications précédentes, **caractérisé en ce que** les ergots avant (27) du ou des segments de serrage (25) présentent, en commençant à l'extrémité avant (VE), une première surface de contact (121) adaptée à l'angle d'inclinaison de la première partie conique (103) et une deuxième surface de contact (123) adaptée à la première partie cylindrique (101).

9. Dispositif de serrage selon l'une quelconque des revendications précédentes, **caractérisé en ce que** les ergots arrière (29) du ou des segments de serrage (25) présentent une troisième surface de contact (129) adaptée à l'angle d'inclinaison de la troisième partie conique (109).

10. Dispositif de serrage selon l'une quelconque des revendications précédentes, **caractérisé en ce que** les ergots arrière (29) du ou des segments de serrage (25) présentent une quatrième surface de contact (131) adaptée à l'angle d'inclinaison de la deuxième partie conique (107).

11. Dispositif de serrage selon l'une quelconque des revendications précédentes, **caractérisé en ce que** les griffes de serrage arrière (41) présentent une cinquième surface de contact (133), et **en ce que** la cinquième surface de contact (133) est adaptée à l'angle d'inclinaison du cône (43).

12. Dispositif de serrage selon l'une quelconque des revendications précédentes, **caractérisé en ce que** l'angle d'inclinaison du cône (43) et/ou de la cinquième surface de contact (133) des segments de serrage (25) se situe dans une plage de 20° à 45°, et de préférence est de 30° ou de 35°.

13. Dispositif de serrage selon l'une quelconque des revendications précédentes, **caractérisé en ce que** le ou les segments de serrage (25) s'appuient avec leur extrémité arrière contre une rondelle intermédiaire (47) sollicitée par un ressort ou directement contre un ressort de compression (45), de sorte que les segments de serrage (25) peuvent s'écarter dans la direction axiale lorsqu'ils ne peuvent pas glisser de la première partie conique (103) sur la première partie cylindrique (101).

14. Dispositif de serrage selon l'une quelconque des revendications précédentes, **caractérisé en ce qu'**une rondelle de butée (11) est présente à l'extrémité avant (VE) du boulon de traction (13).

15. Dispositif de serrage selon l'une quelconque des revendications précédentes 2 à 14, **caractérisé en ce que** la première partie cylindrique (101) présente un angle d'inclinaison négatif α faible en termes de valeur.

16. Dispositif de serrage selon l'une quelconque des revendications précédentes 13 à 15, **caractérisé en ce que** la rondelle intermédiaire (47) est réalisée de manière tronconique (142) sur son côté tourné vers le segment de serrage (25).

17. Dispositif de serrage selon l'une quelconque des revendications 13 à 16, **caractérisé en ce que** les segments de serrage 25 présentent à leurs extrémités arrière, au moins par endroits, un biseau (141).

18. Dispositif de serrage selon l'une quelconque des revendications précédentes, **caractérisé en ce qu'**un épaulement (48), qui sert de butée pour les segments de serrage (25), est réalisé sur le boulon de traction (13).

19. Dispositif de serrage selon l'une quelconque des revendications précédentes, **caractérisé en ce que** le cône (43) est intégré dans la pièce de transformation ou la broche (37) ou conçu en tant que composant séparé.

20. Dispositif de serrage selon l'une quelconque des revendications précédentes, **caractérisé en ce qu'**il fait partie d'un porte-outil entraîné ou fixe.

21. Dispositif de serrage selon l'une quelconque des revendications précédentes, **caractérisé en ce qu'**il est utilisé sur une tourelle d'un tour.
